# EUROPEAN PATENT APPLICATION

(11) **EP 2 706 756 A1**
(43) Date of publication of application: **12.03.2014**
(21) Application number: 13175820.3
(22) Date of filing: 09.07.2013
(51) Int. Cl.: H04N 21/47, H04N 21/433

(54) **Scene information processing apparatus, scene information processing method, and electronic device**

(30) Priority: 10.09.2012 JP 2012198977
(71) Applicant: Kabushiki Kaisha Toshiba, Tokyo 105-8001 (JP)
(72) Inventor: Kobayashi, Naomiki, Tokyo, 105-8001 (JP); Okano, Kazuyuki, Tokyo, 105-8001 (JP); Itakura, Toyokazu, Tokyo, 105-8001 (JP); Tsuji, Masashi, Tokyo, 105-8001 (JP); Nishimoto, Yoshinori, Tokyo, 105-8001 (JP); Sugiura, Motonobu, Tokyo, 105-8001 (JP); Kawada, Hiroshi, Tokyo, 105-8001 (JP); Kato, Masaya, Tokyo, 105-8001 (JP); Hattori, Hiroshi, Tokyo, 105-8001 (JP); Irimoto, Yuuji, Tokyo, 105-8001 (JP); Ozawa, Masahiro, Tokyo, 105-8001 (JP)
(74) Representative: Henkel, Breuer & Partner

(57) **Abstract**

According to one embodiment, a scene information processing apparatus (1) characterized by comprising a reproducing module (144(14(1))) configured to reproduce and configured to display content, a communication module (15/234(222)) configured to receive scene information corresponding to a scene in the content or transmits input information corresponding to a scene in the content, and an input module (243(222)) configured to cause the communication module to determine, in a transmittable manner, a point in time of the input information was input during the reproduction of the content.

## Description

Embodiments described herein relates generally to a scene information processing apparatus, a scene information processing method, and an electronic device.

In recent years, digital televisions (DTVs) capable of browsing Internet sites have become popular. Such DTVs not only receive and reproduce broadcasting (content) but also output information on various sites on the World Wide Web. Furthermore, the DTVs accept merchandise purchase procedures via various sites.

As described above, the DTVs have not only the broadcast (program) reproduction function but also the network communication function. These functions are often used separately and use of their combination is in its infancy. Therefore, there have been demands that the functions should be able to be used without regard to the boundary between broadcasting (programs) and Internet content to improve services.

An object of the invention is to provide a scene information processing apparatus, a scene information processing method, and an electronic device which are capable of providing services related to the reproduction of content.

In general, according to one embodiment, a scene information processing apparatus characterized by comprising: a reproducing module configured to reproduce and configured to display content; a communication module configured to receive scene information corresponding to a scene in the content or transmits input information corresponding to a scene in the content; and an input module configured to cause the communication module to determine, in a transmittable manner, a point in time of the input information was input during the reproduction of the content.

A general architecture that implements the various features of the embodiments will now be described with reference to the drawings. The drawings and the associated descriptions are provided to illustrate the embodiments and not to limit the scope of the invention.
FIG. 1 is an exemplary diagram schematically showing an example of a "Scenefo" startup with a system configuration according to an embodiment;
FIG. 2 is an exemplary diagram schematically showing an example of a "SceneList" startup with a system configuration according to an embodiment;
FIG. 3 is an exemplary diagram schematically showing an example of a "ScenePlay" startup with a system configuration according to an embodiment;
FIG. 4 is an exemplary diagram showing an example of "describes the definitions", "meanings of terms" and "abbreviations" according to an embodiment;
FIG. 5A is an exemplary diagram showing an example of a software configuration according to an embodiment;
FIG. 5B is an exemplary diagram showing an example of a configuration of an information processing apparatus and various functional modules according to the embodiment;
FIG. 6A is an exemplary diagram showing an example of a "Scenefo" and a "SceneList" functions according to an embodiment;
FIG. 6B is an exemplary diagram showing an example of a "Scenefo" and a "SceneList" functions according to an embodiment;
FIG. 6C is an exemplary diagram showing an example of a "Scenefo" and a "SceneList" functions according to an embodiment;
FIG. 7 is an exemplary diagram showing an example of the screen changes between a "Scenefo" screen and a "SceneList" screen according to an embodiment;
FIG. 8 shows an exemplary diagram showing an example of the transition of "Scenefo" and "SceneList" application operation screens according to an embodiment;
FIG. 9 is an exemplary diagram showing an example of "describes the definitions", "meanings of terms" and "abbreviations" according to an embodiment;
FIG. 10 is an exemplary diagram showing an example of the linkage between various servers according to an embodiment;
FIG. 11 is schematically an exemplary diagram showing an example of a configuration of a metadata server according to an embodiment;
FIG. 12A is an exemplary diagram showing an example of metadata included in scene information according to an embodiment;
FIG. 12B is an exemplary diagram showing an example of metadata included in scene information according to an embodiment;
FIG. 12C is an exemplary diagram showing an example of metadata included in scene information according to an embodiment;
FIG. 12D is an exemplary diagram showing an example of metadata included in scene information according to an embodiment;
FIG. 13 is an exemplary diagram showing an example of a system configuration according to an embodiment;
FIG. 14 is an exemplary diagram showing an example of the way services are offered using scene information according to an the embodiment;
FIG. 15A is an exemplary diagram showing an example of a general outline of the transition of screens according to an embodiment;

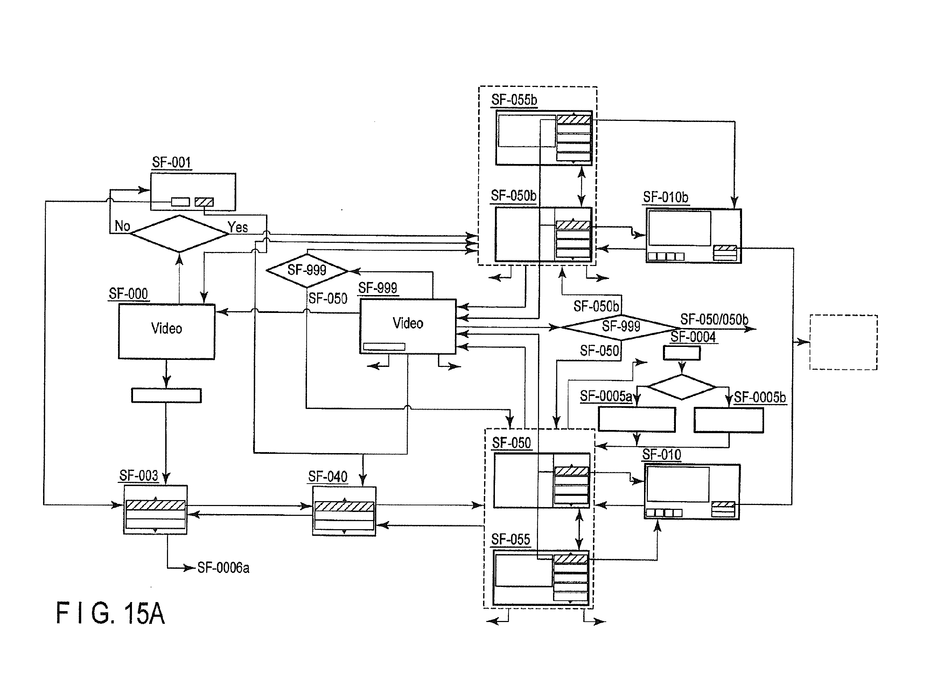

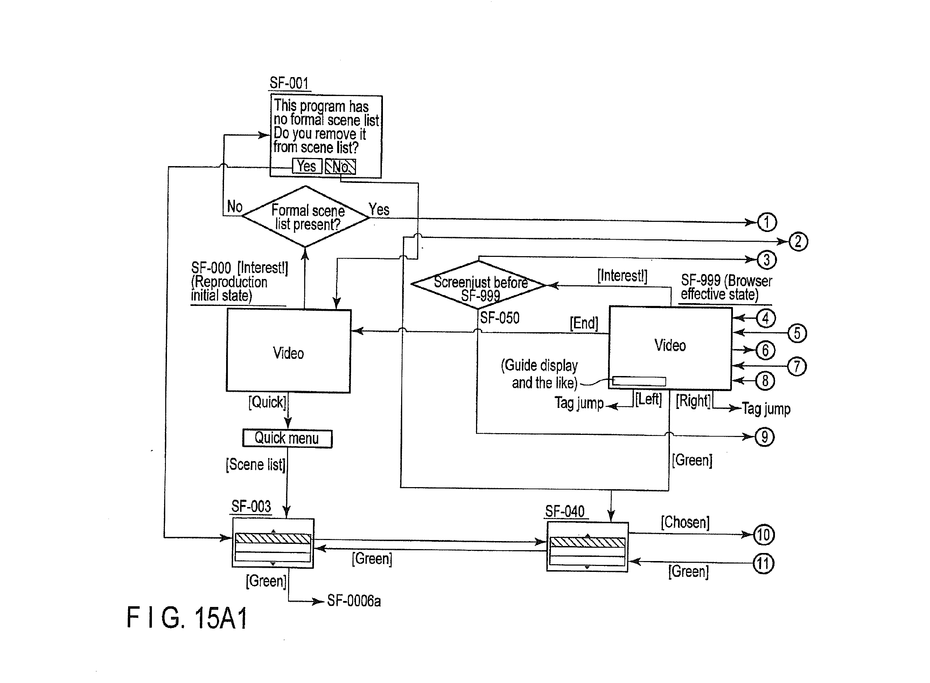

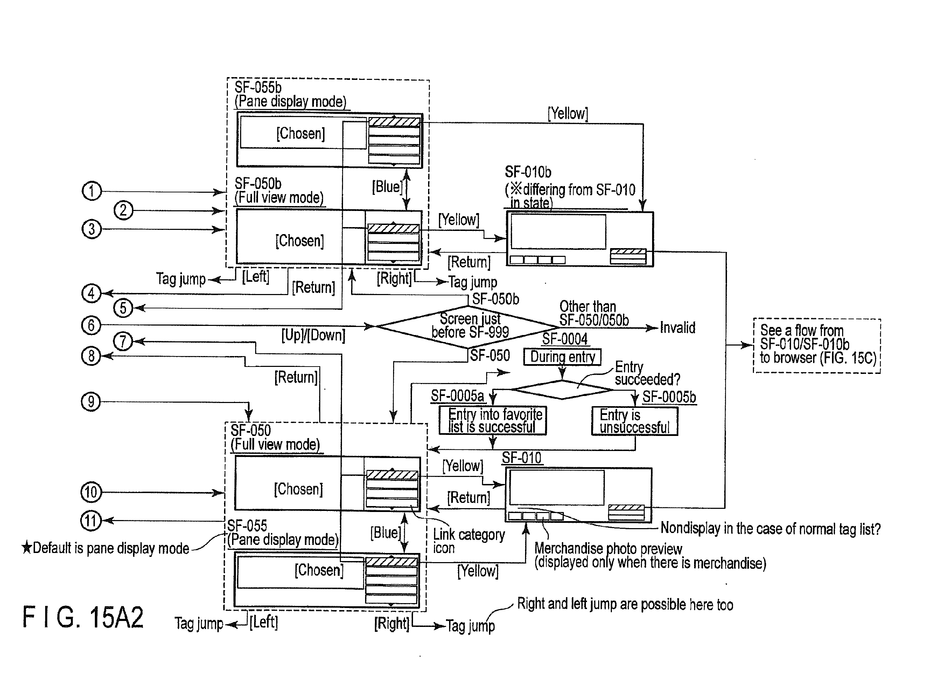

FIG. 15A1 is an exemplary diagram showing an example of an outline of the transition of screens according to an embodiment;
FIG. 15A2 is an exemplary diagram showing an example of an outline of the transition of screens according to an embodiment;

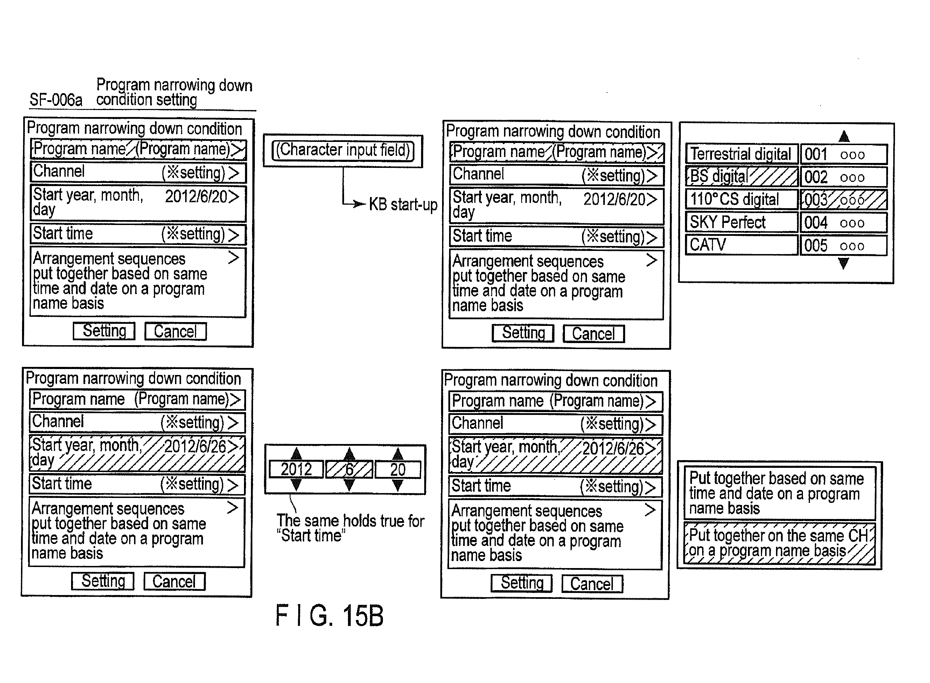

FIG. 15B is an exemplary diagram showing an example of an outline of the transition of screens according to an embodiment;

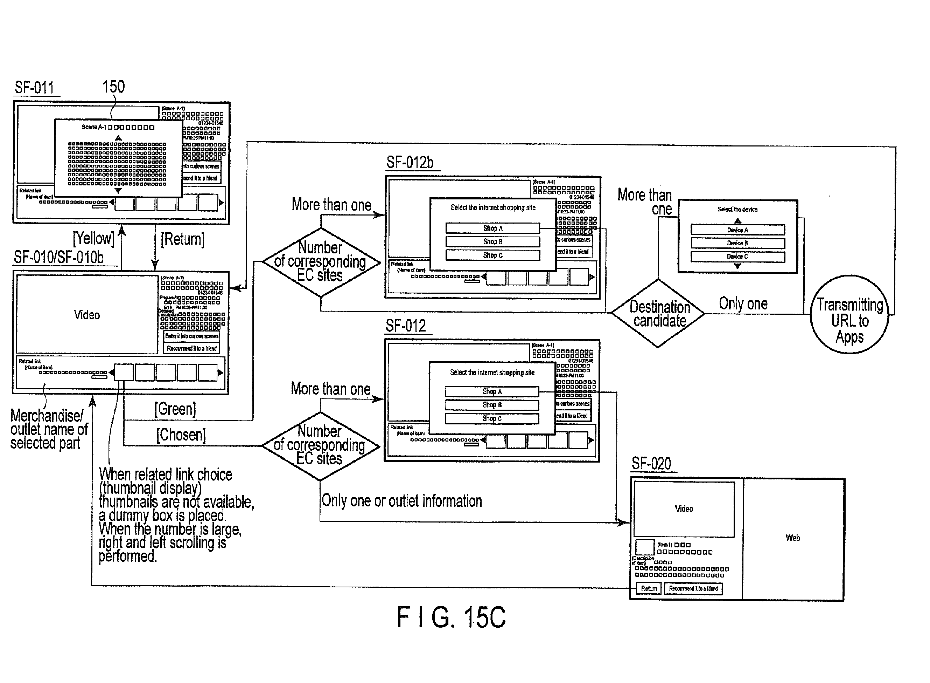

FIG. 15C is an exemplary diagram showing an example of an outline of the transition of screens according to an embodiment;

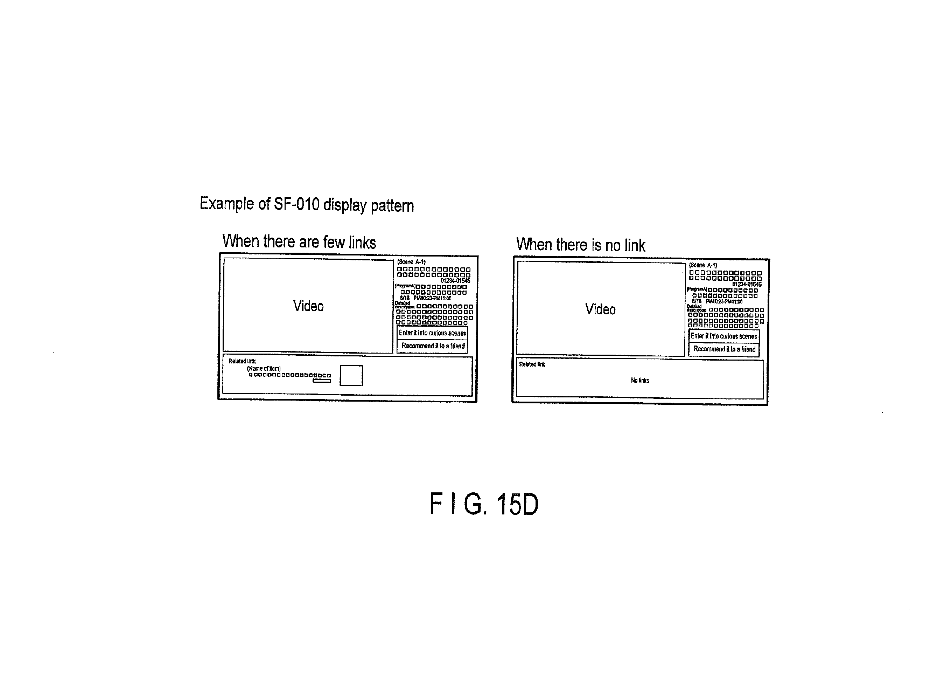

FIG. 15D is an exemplary diagram showing an example of an outline of the transition of screens according to an embodiment;

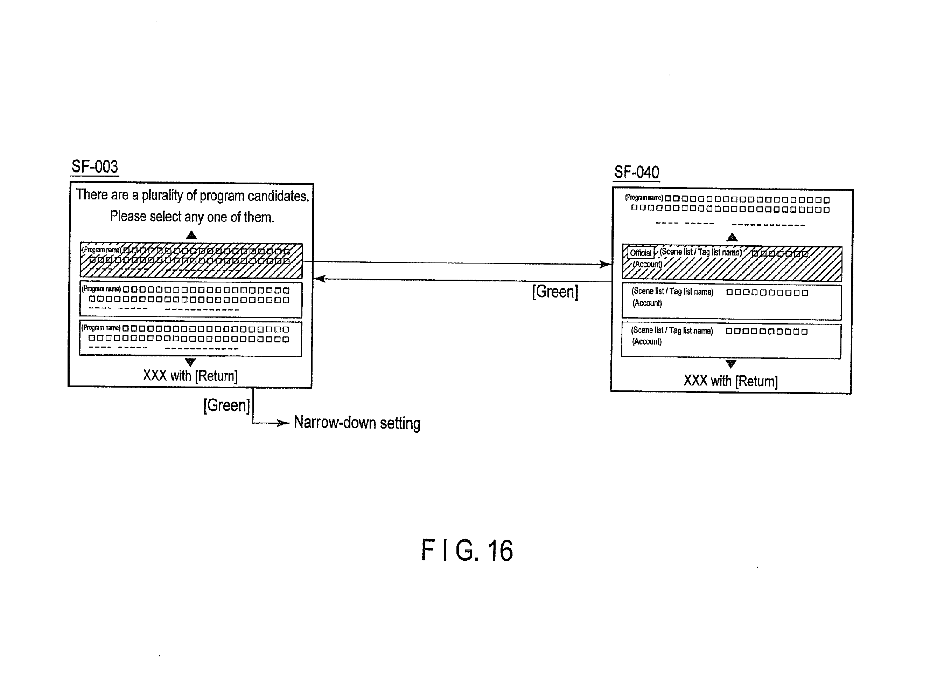

FIG. 16 is an exemplary diagram showing an example of the screen changes between the screen includes selection of a list is displayed and the screen includes a "formal tag list" according to an embodiment;

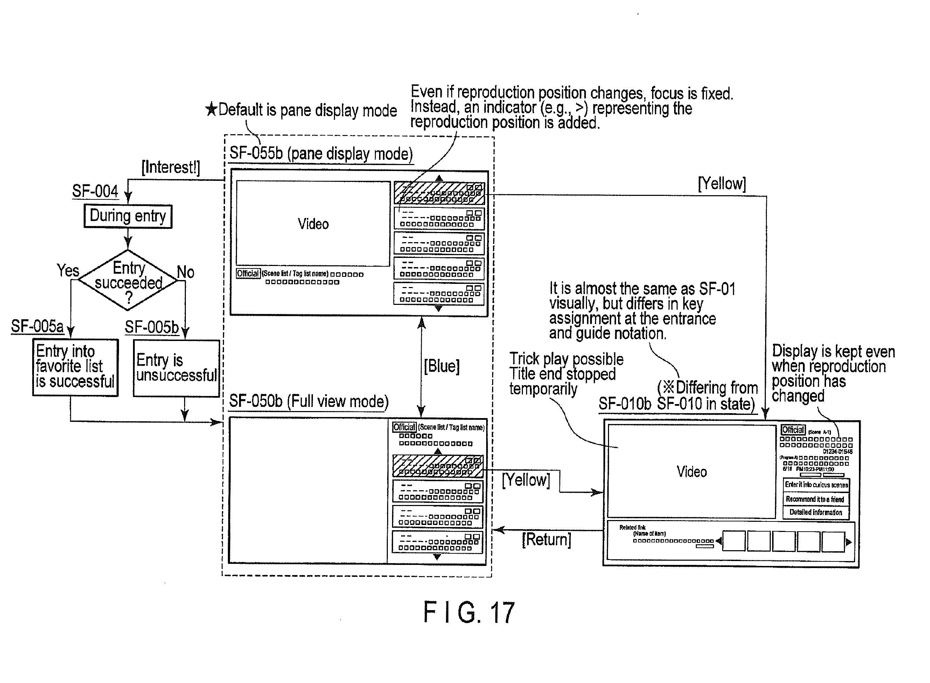

FIG. 17 is an exemplary diagram showing an example of the details of the transition of screens according to an embodiment;

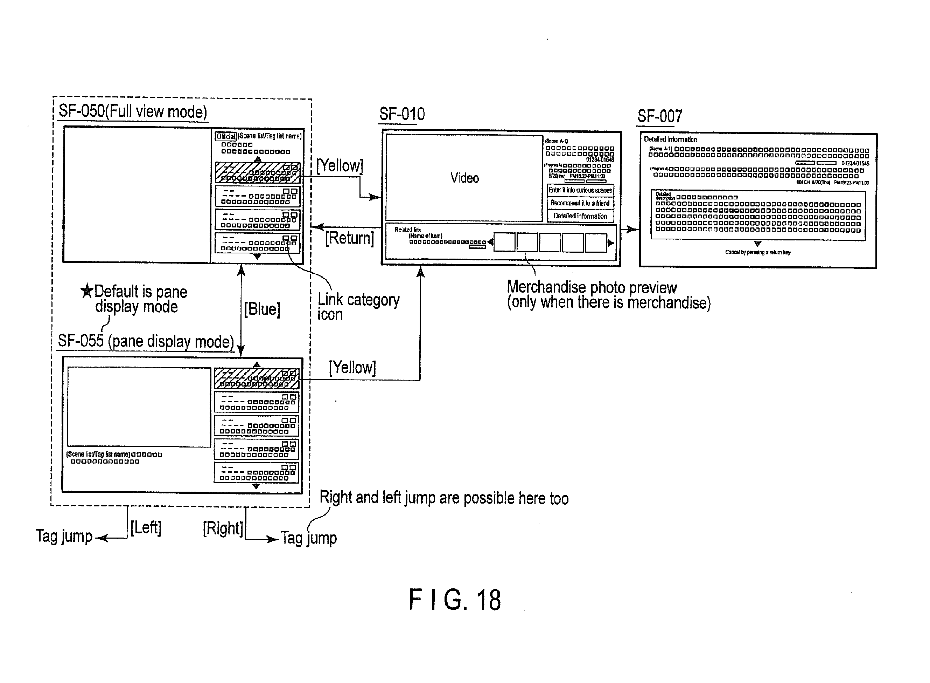

FIG. 18 is an exemplary diagram showing an example of the details of the transition of screens according to an embodiment;

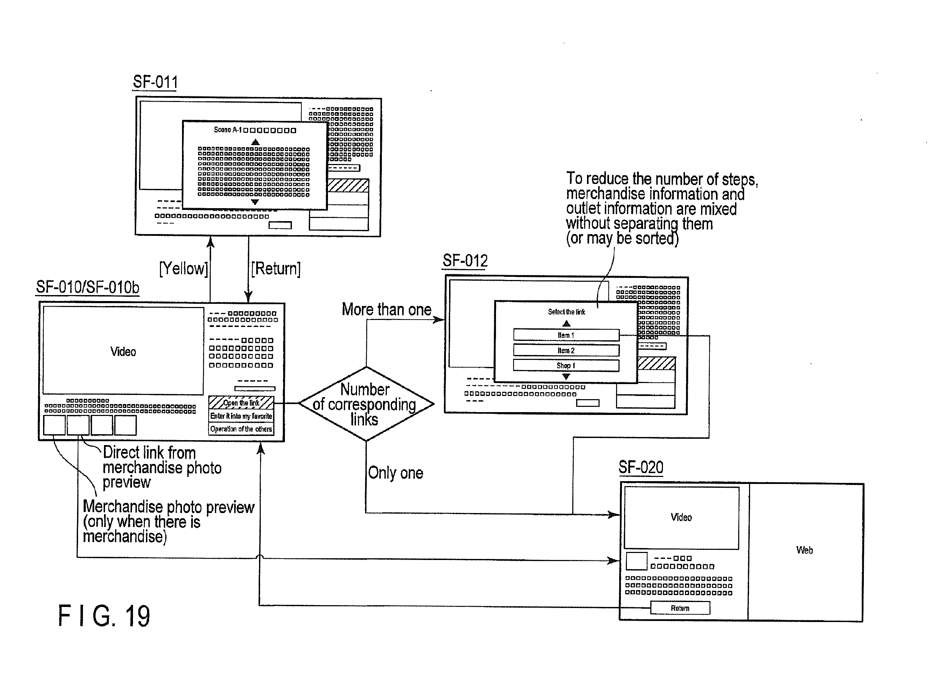

FIG. 19 is an exemplary diagram showing an example of the details of the transition of screens according to an embodiment;

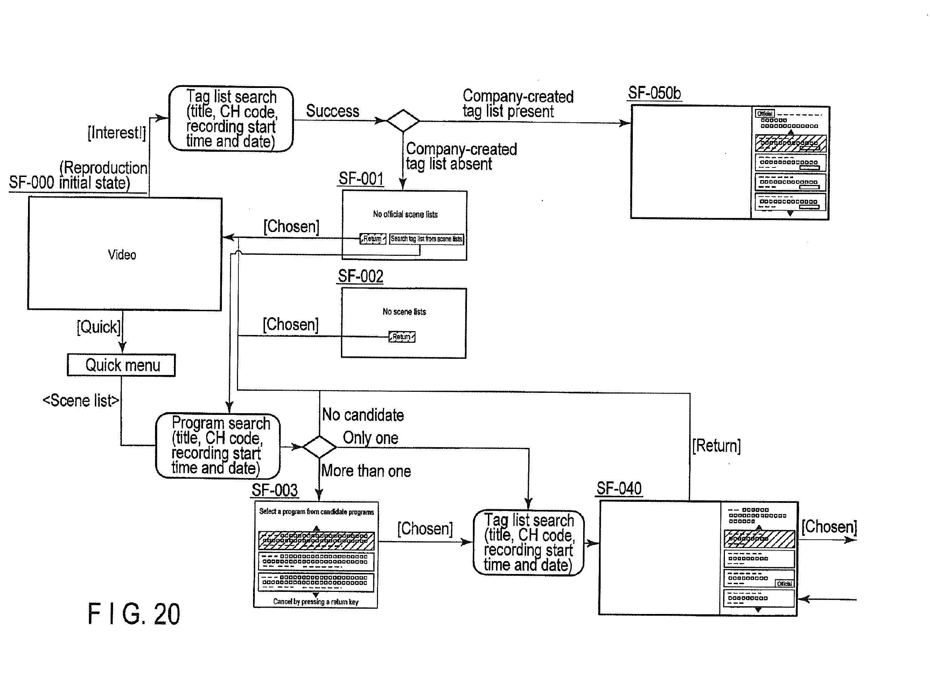

FIG. 20 is an exemplary diagram showing an example of the details of the transition of screens according to an embodiment;

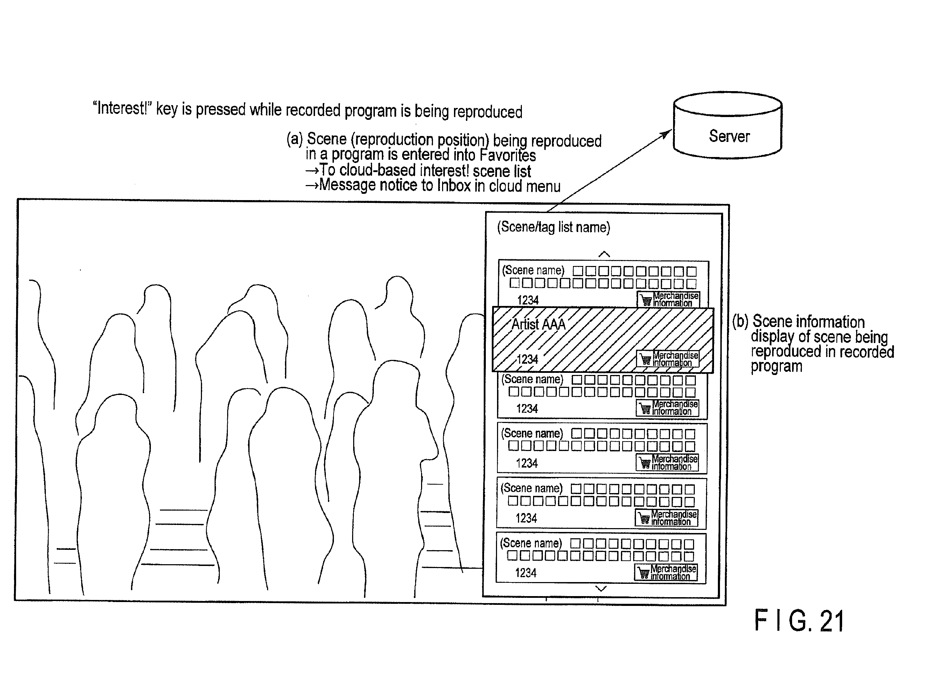

FIG. 21 is an exemplary diagram showing an example of a screen displayed according to an embodiment;

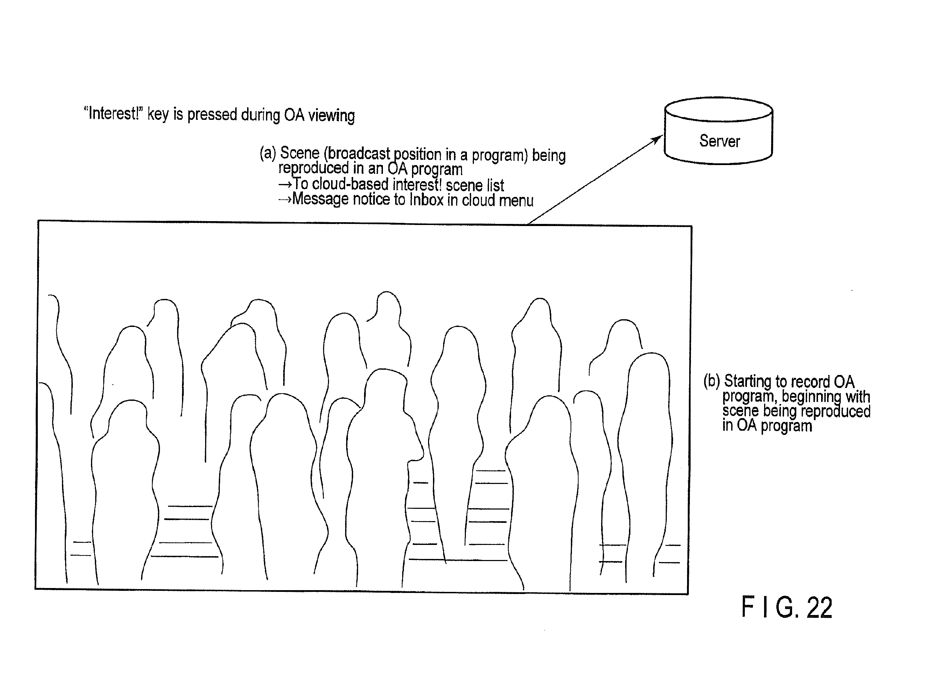

FIG. 22 is an exemplary diagram showing an example of a screen displayed according to an embodiment;

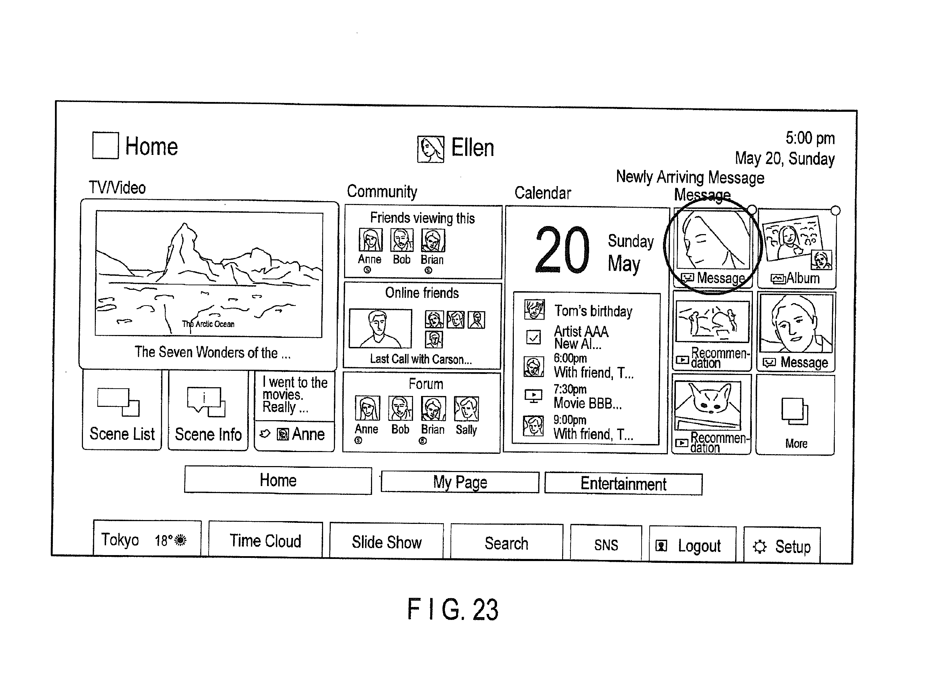

FIG. 23 is an exemplary diagram showing an example of a user's screen for a cloud menu screen according to an embodiment;

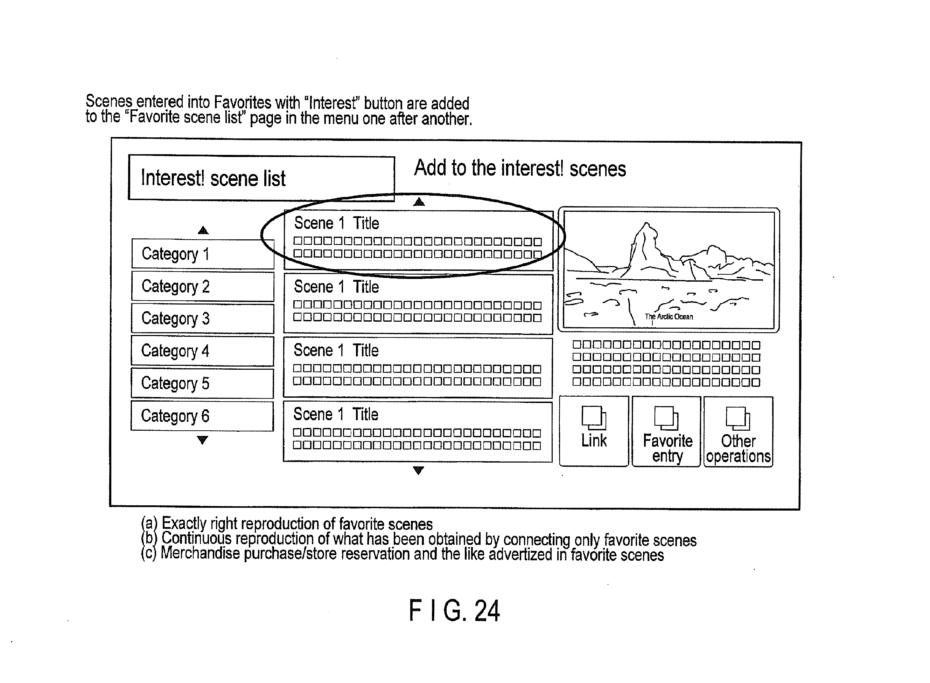

FIG. 24 is an exemplary diagram showing an example of an "Interest scenes list" screen for user's screen with a cloud menu screen according to an embodiment;

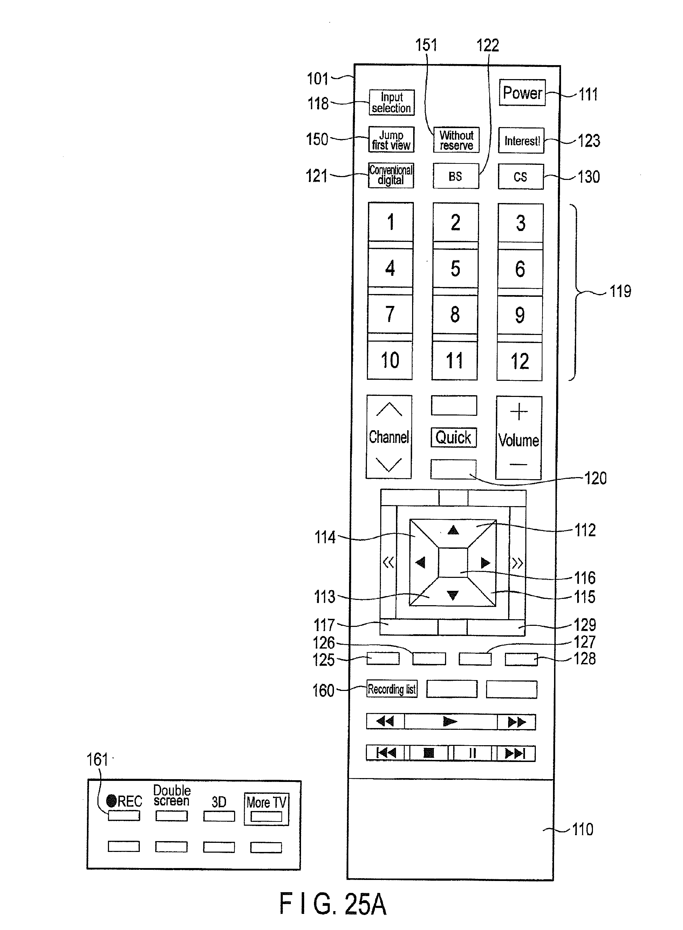

FIG. 25A is an exemplary diagram showing an example of a remote-control device that inputs a control instruction according to an embodiment;

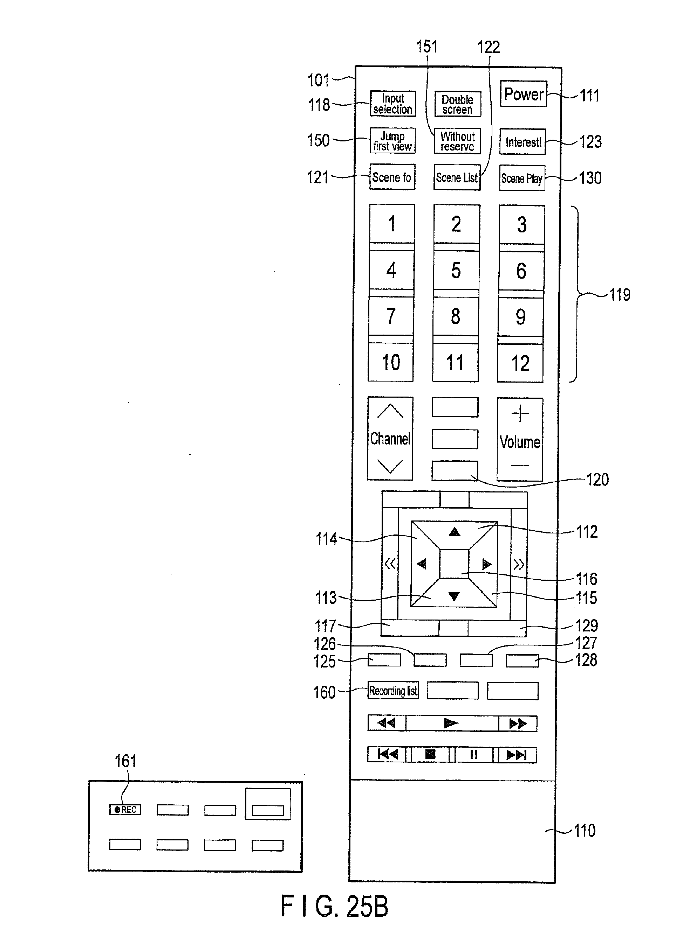

FIG. 25B is an exemplary diagram showing an example of a remote-control device that inputs a control instruction according to an embodiment;

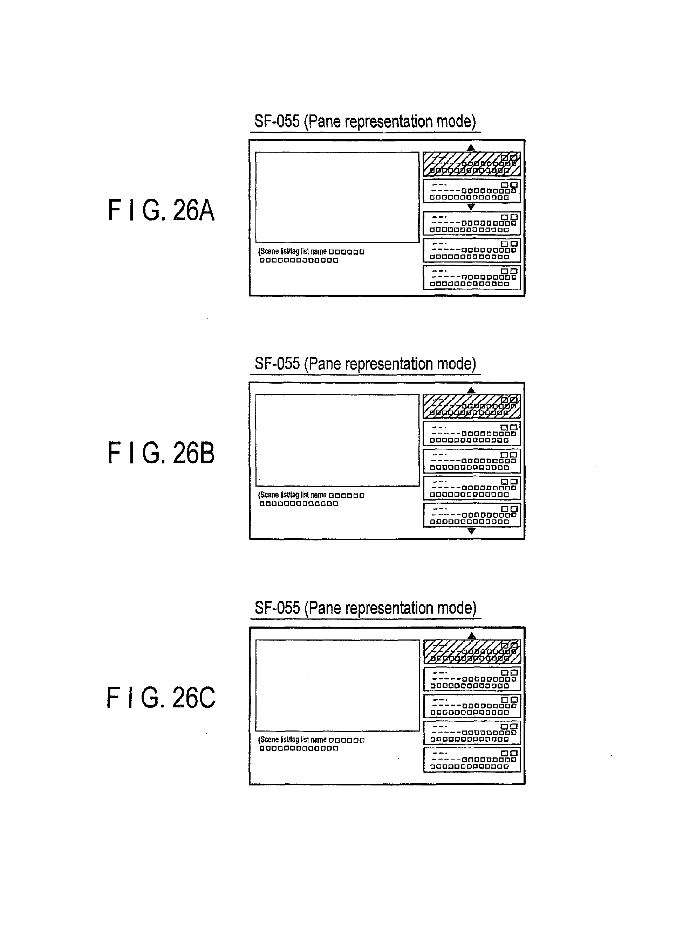

FIGS. 26A, 26B and 26C are exemplary diagrams, each showing an example of a screen displayed according to an embodiment;

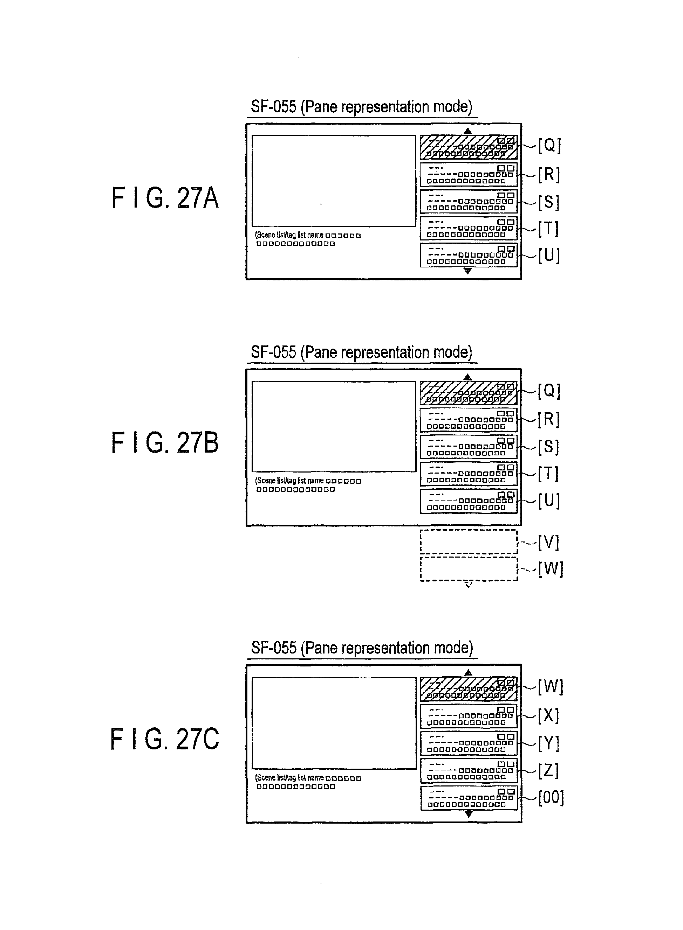

FIGS. 27A, 27B and 27C are exemplary diagrams, each showing an example of a screen displayed according to an embodiment;

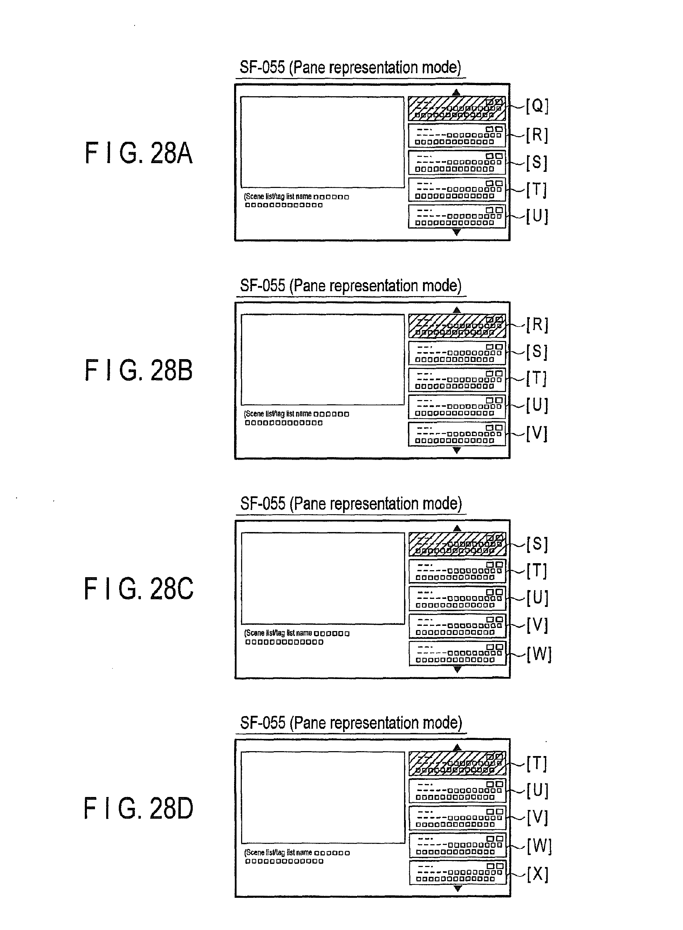

FIGS. 28A, 28B, 28C and 28D are exemplary diagrams, each showing an example of a screen displayed according to an embodiment;

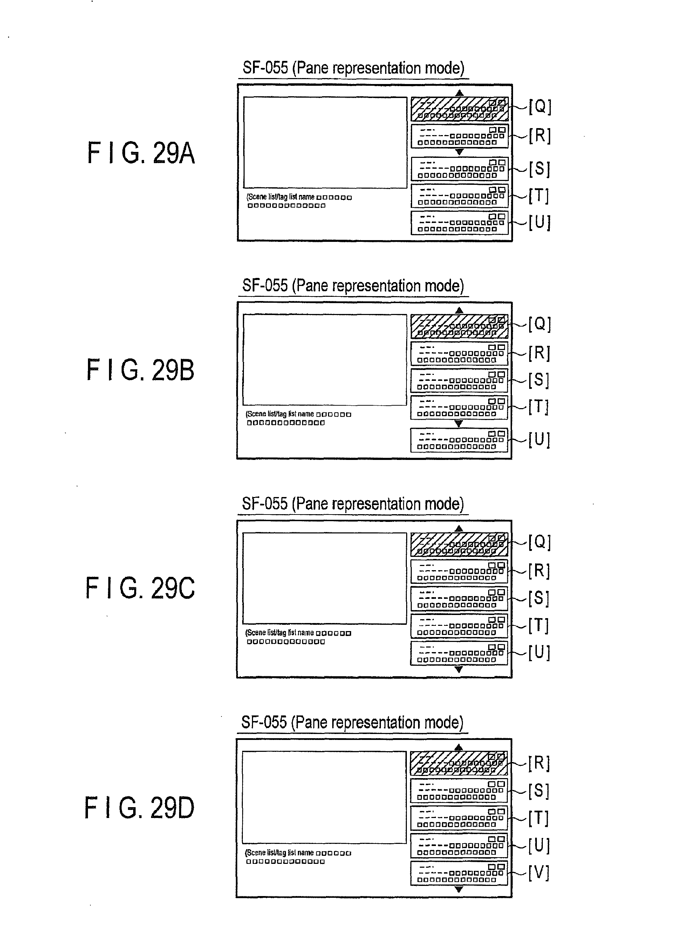

FIGS. 29A, 29B, 29C and 29D are exemplary diagrams, each showing an example of a screen displayed according to an embodiment;

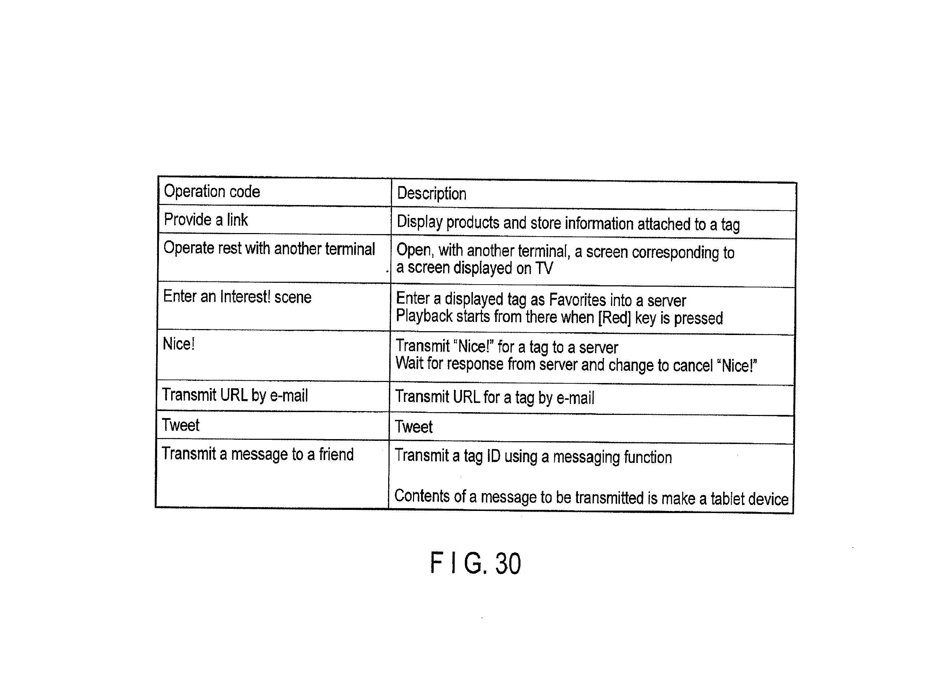

FIG. 30 is an exemplary diagram showing an example of "operation codes" and "meanings of codes" according to an embodiment;

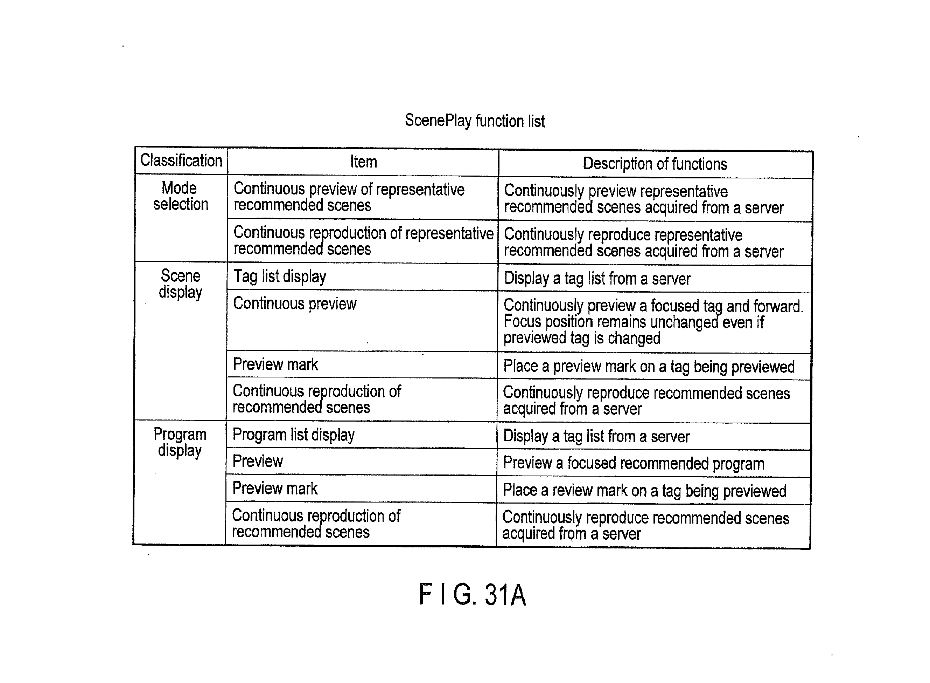

FIG. 31A is an exemplary diagram showing an example of a "ScenePlay" function according to an embodiment;

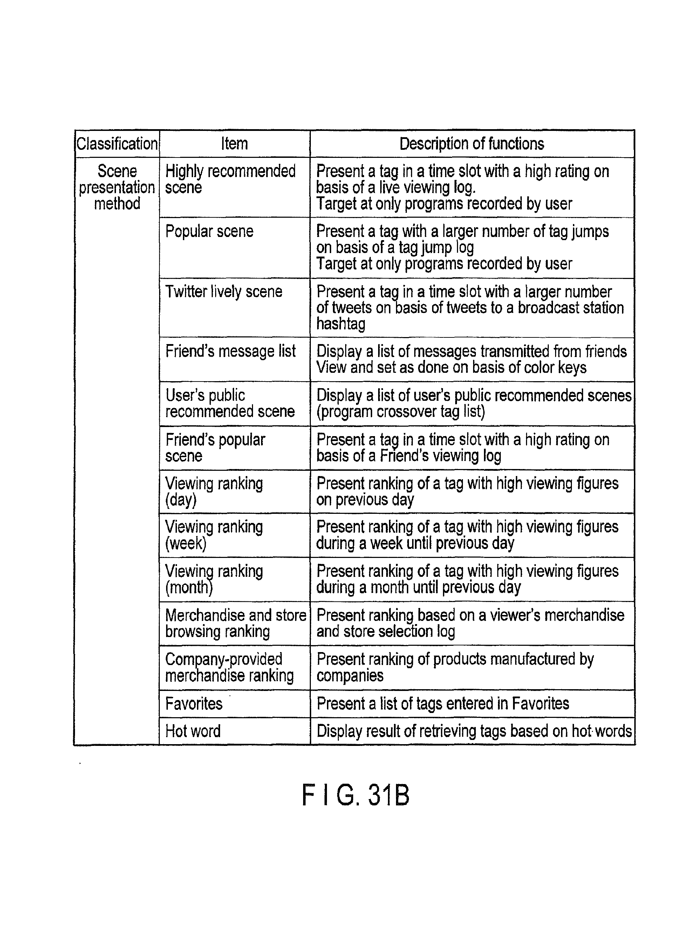

FIG. 31B is an exemplary diagram showing an example of a "ScenePlay" function according to an embodiment;

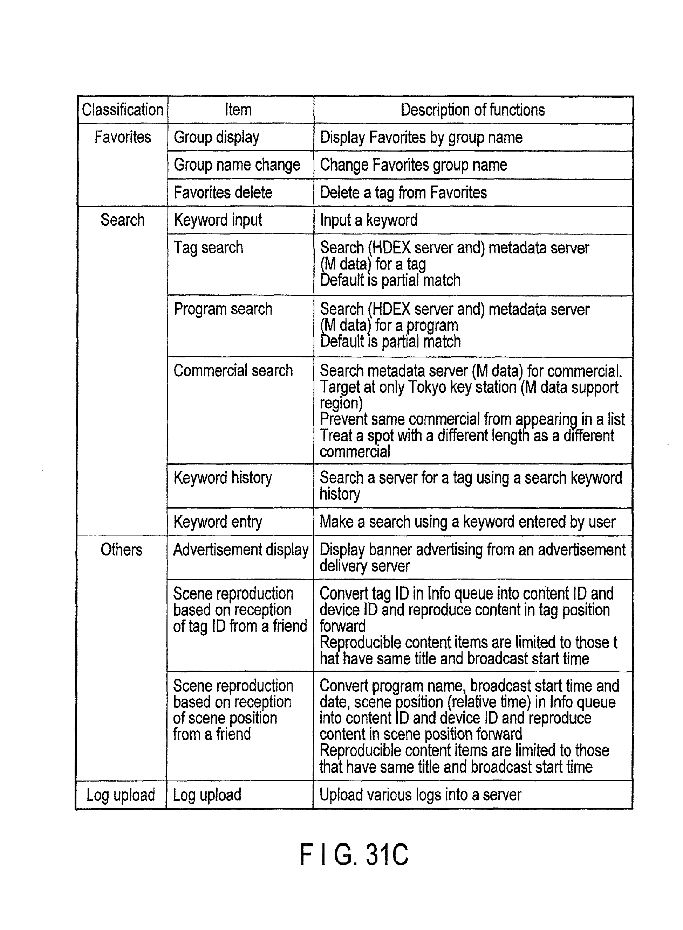

FIG. 31C is an exemplary diagram showing an example of a "ScenePlay" function according to an embodiment;

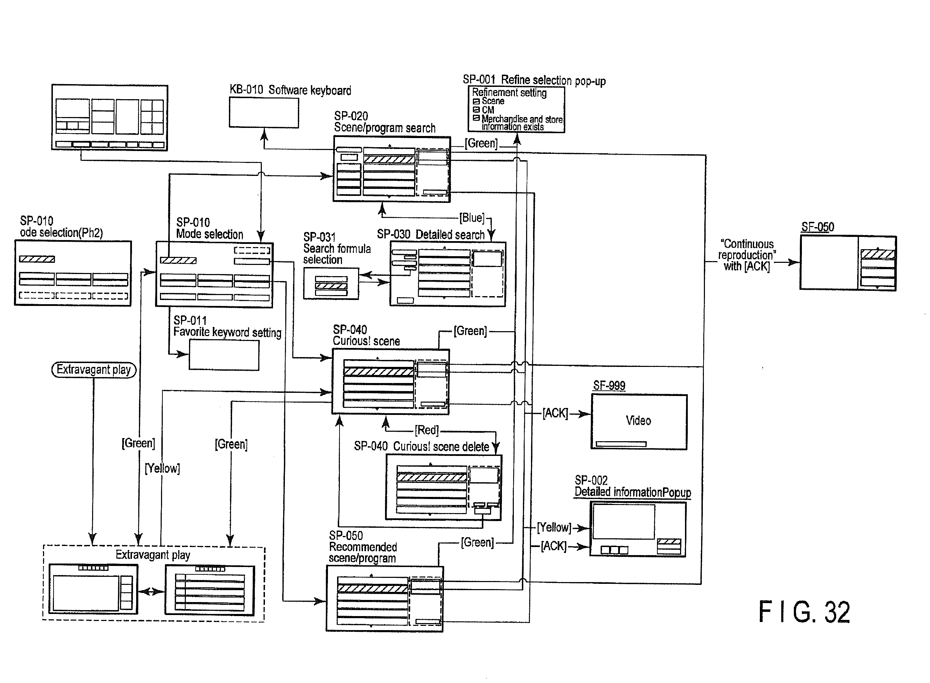

FIG. 32 is an exemplary diagram showing an example of the screen changes between "ScenePlay" screens according to an embodiment;

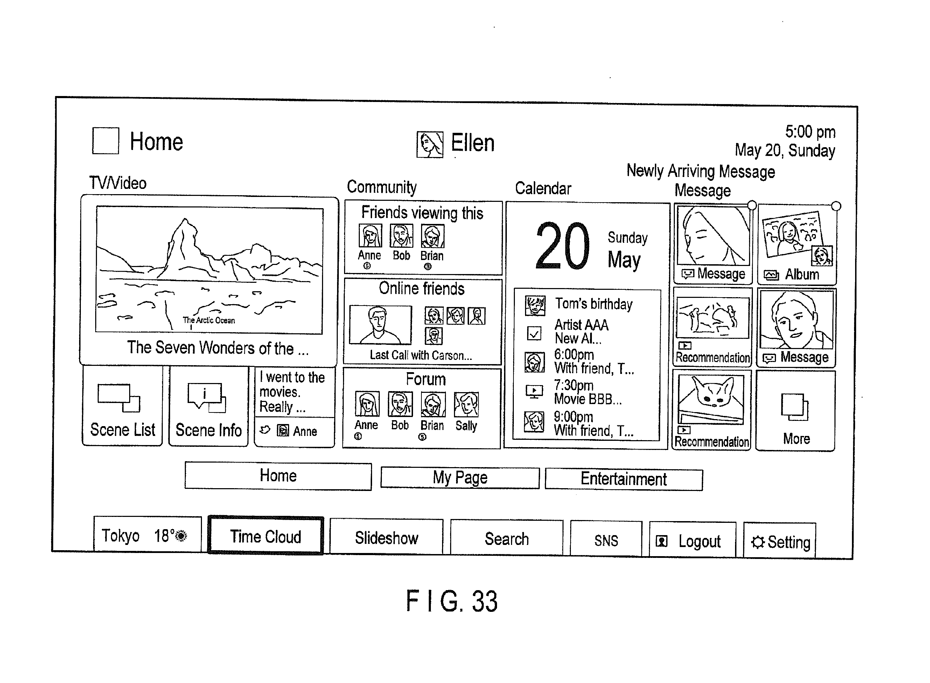

FIG. 33 is an exemplary diagram showing an example of a cloud menu screen according to an embodiment;

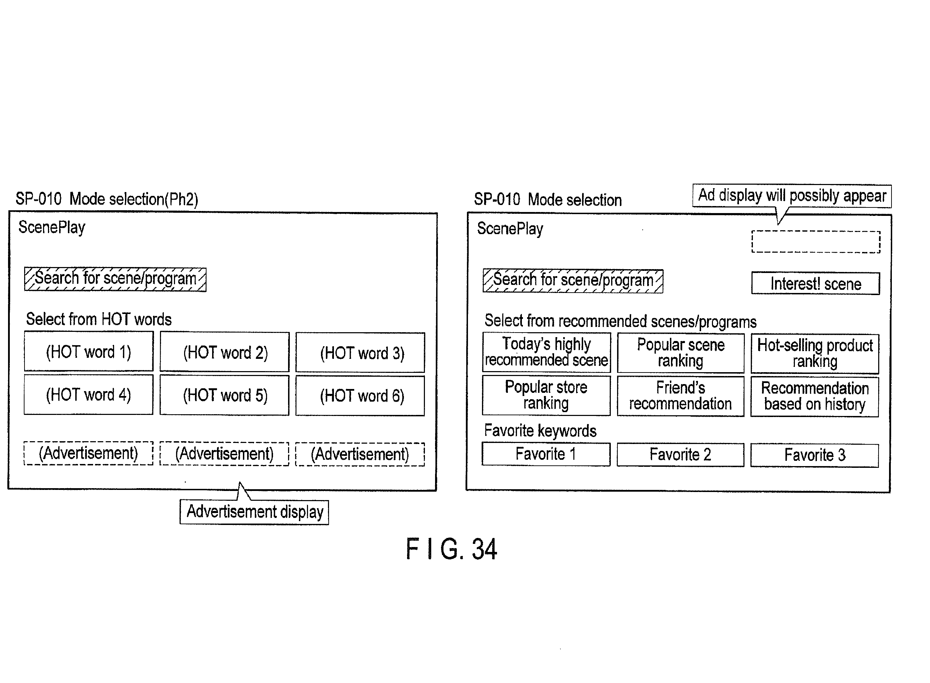

FIG. 34 is an exemplary diagram showing an example of screen representations after the screen changes according to an embodiment;

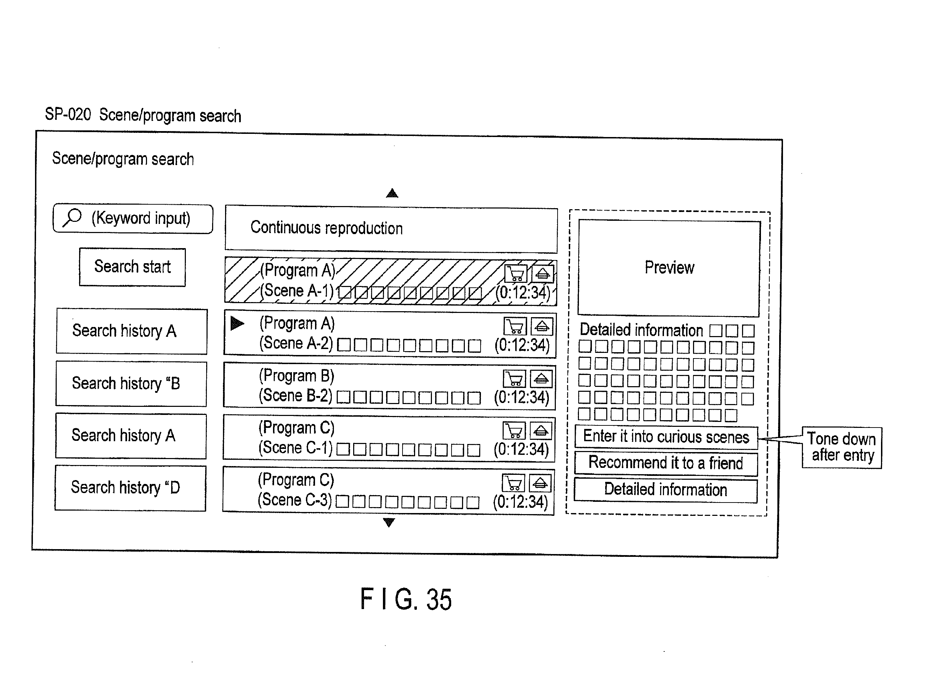

FIG. 35 is an exemplary diagram showing an example of screen representations after the screen changes according to an embodiment;

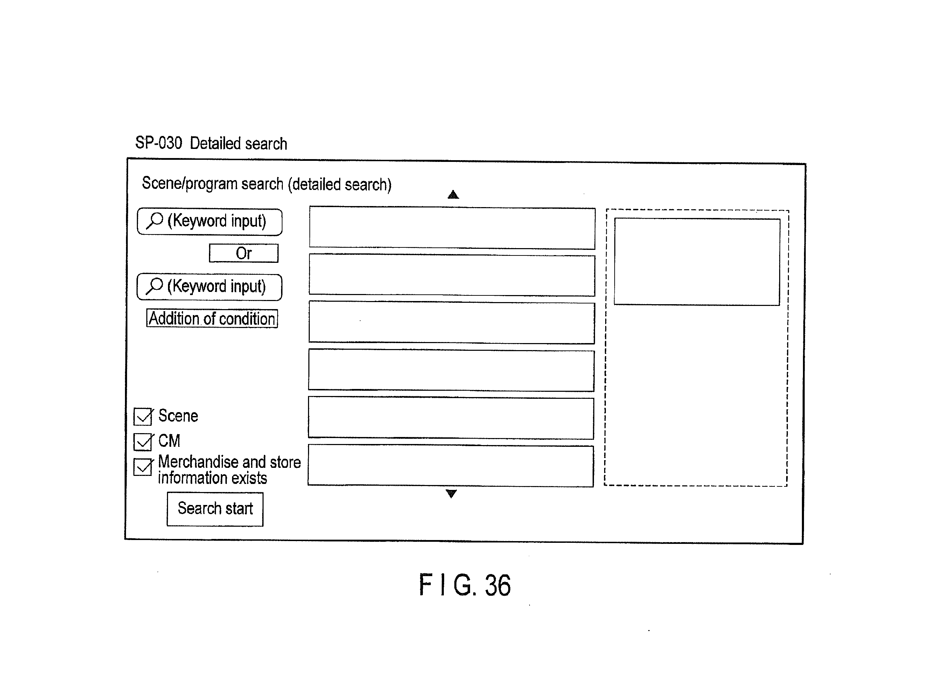

FIG. 36 is an exemplary diagram showing an example of screen representations after the screen changes according to an embodiment;

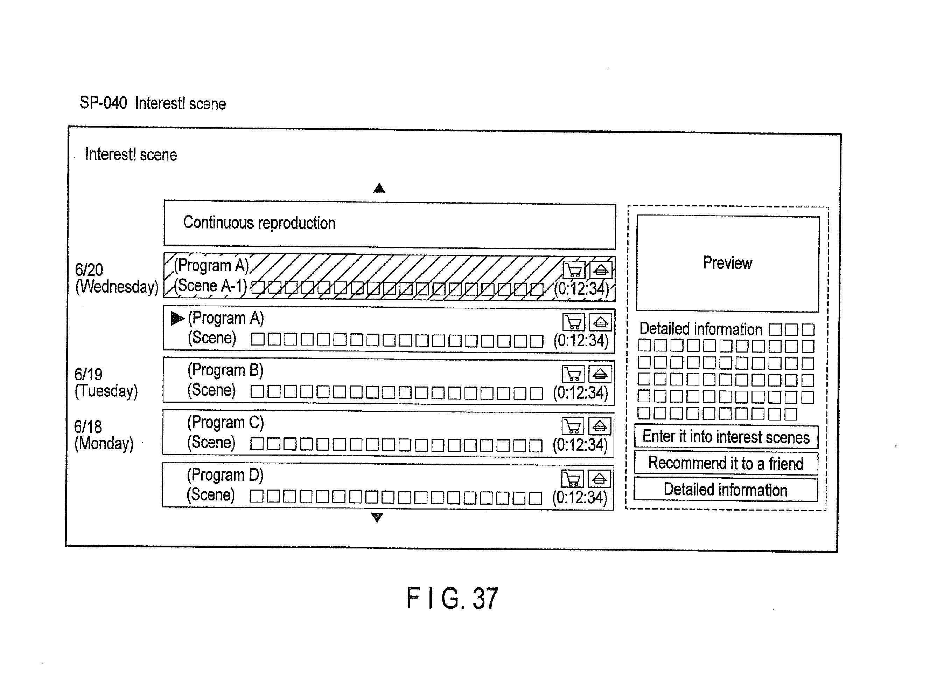

FIG. 37 is an exemplary diagram showing an example of screen representations after the screen changes according to an embodiment;

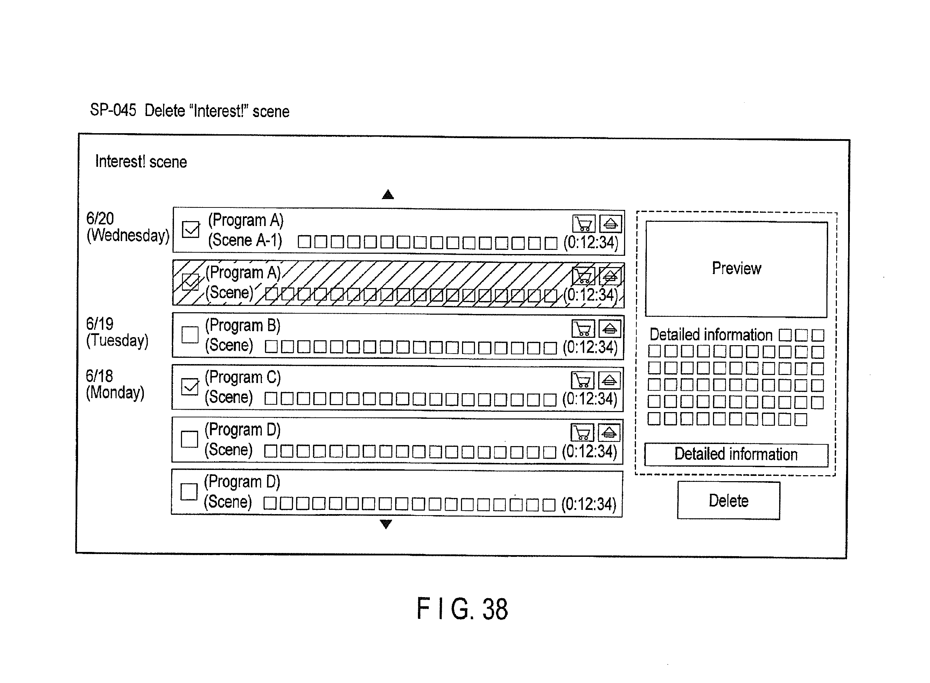

FIG. 38 is an exemplary diagram showing an example of screen representations after the screen changes according to an embodiment;

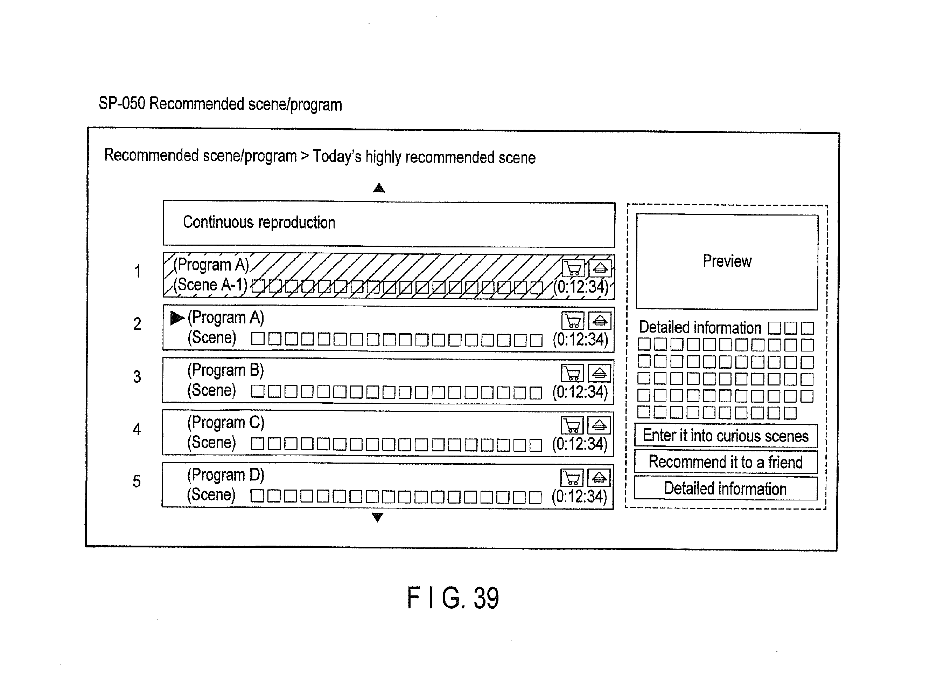

FIG. 39 is an exemplary diagram showing an example of screen representations after the screen changes according to an embodiment;

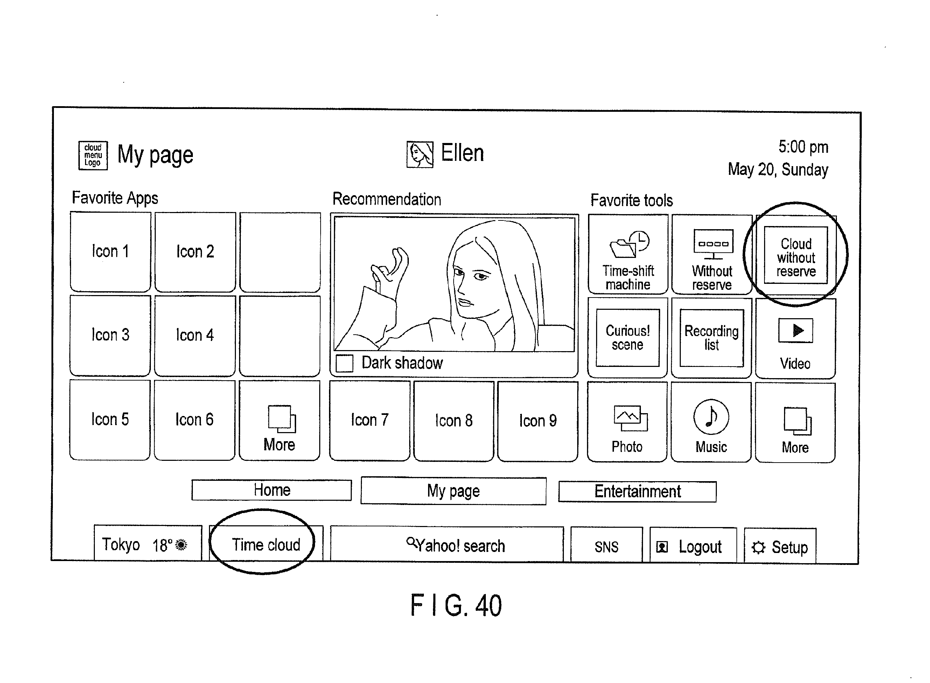

FIG. 40 is an exemplary diagram showing an example of a My page screen for a user's screen for a cloud menu screen according to an embodiment;

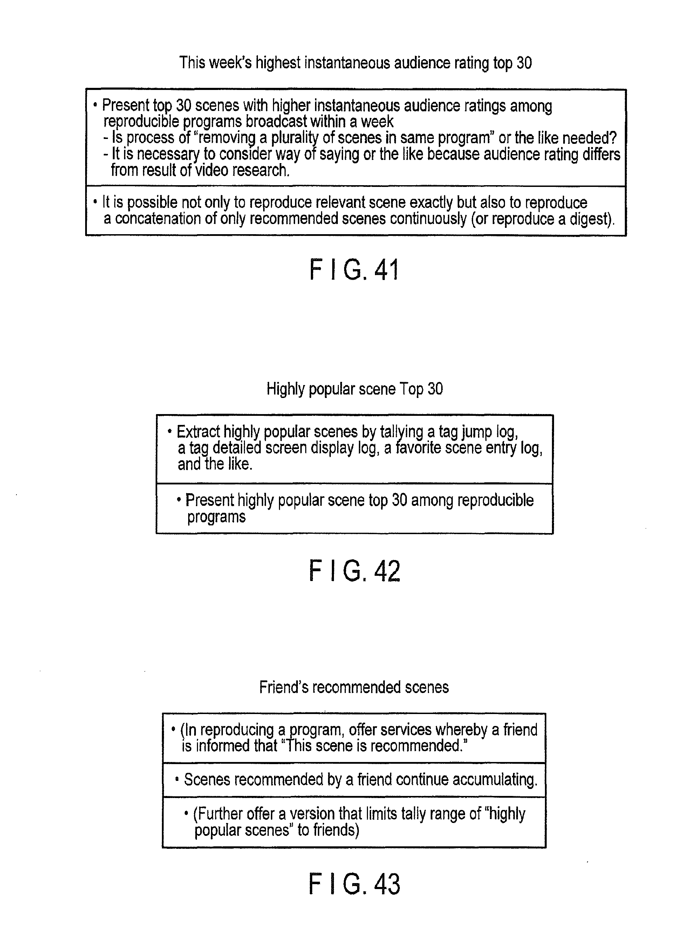

FIG. 41 is an exemplary view showing an example of the "instantaneous audience rating top 30" screen display according to an embodiment;
FIG. 42 is an exemplary view showing an example of the "popular scene top 30" screen display according to an embodiment;
FIG. 43 is an exemplary view showing an example of a "Friend's recommended scene information" screen display according to an embodiment;

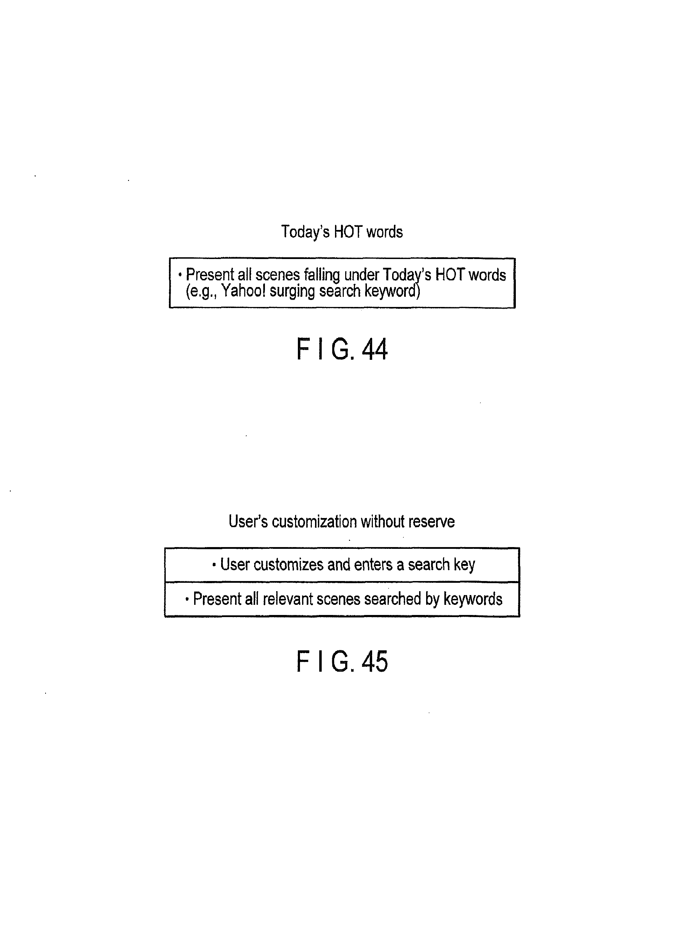

FIG. 44 is an exemplary view showing an example of a "scene information corresponding to Today's hot words" screen display according to an embodiment; and
FIG. 45 is an exemplary view showing an example of a "user-customized scene reproduction" screen display according to an embodiment.

Embodiments will now be described hereinafter in detail with reference to the accompanying drawings.

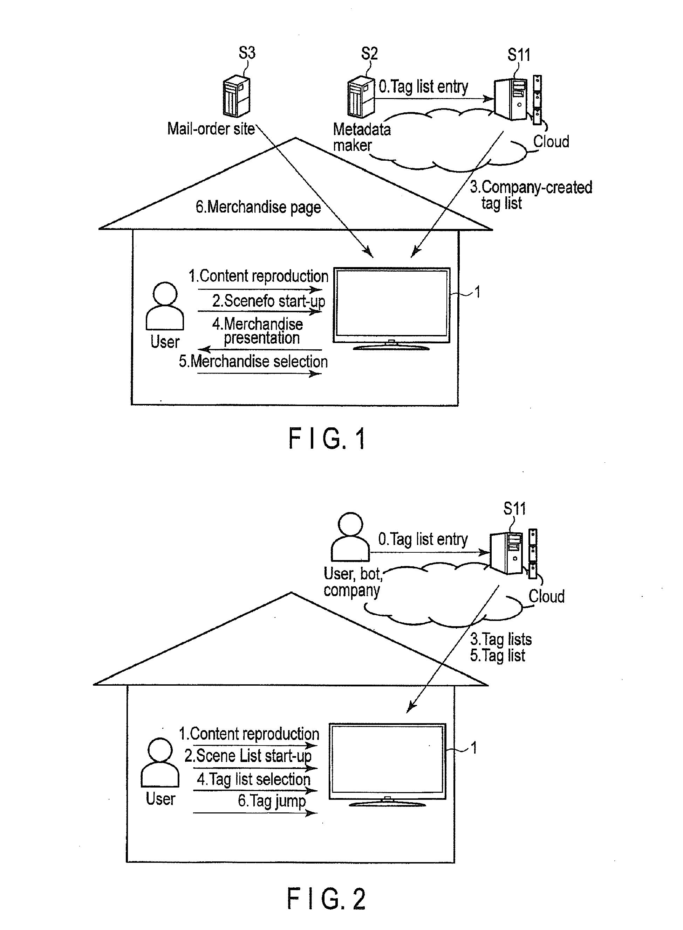

FIG. 1 to FIG. 3 schematically show a system configuration according to an embodiment. A system comprises various servers (a tag list server S11, a metadata creation server S2, a mail-order site server S3) and a client terminal 1, such as a digital television (DTV). In addition, in the system, a mobile device (such as a tablet computer or smart-phone) 2 can be used. While in the embodiment, a case where a DTV is used as a client terminal 1 is described as an example of the system configuration, the client terminal 1 is not limited to a DTV. The client terminal 1 may be any device, provided that the device has, for example, a user interface, a communication function, a broadcast receiving function, a processing function of processing a received broadcast or program, a program output function of outputting a program, a storage function, or the like. For example, a digital recorder is enumerated as one of the devices. In addition, the client terminal 1 may be applied to a personal computer (PC) that has the function of receiving a broadcast, a video display device (monitor device) that connects with a video recording device with a broadcast receiving device, a portable device that has a broadcast receiving function, or the like. Broadcasts include what is provided by a broadcasting company (broadcasting station) as radio-waves propagated through space, what is delivered by a provider through a network, such as a cable or IP (Internet Protocol) network, or the like. Moreover, broadcasts include video, audio and/or music and the like. A program using a specific length of time (broadcast time) as a unit is provided continuously or for a specific period (time). A program may be called content or stream. A video includes a moving image, a still image, text (information expressed by characters, symbol, or the like represented by coded code strings), and arbitrary combination of them.

Hereinafter, a time cloud function provided in a DTV 1 will be explained.

The time cloud function is service that connects a tag or scene information created by a metadata maker, a user, a "bot" ("tag bot"), or the like with video content. The time cloud function is composed of the following three functions: "Scenefo", "SceneList" and "ScenePlay". The three functions are called a "Scenefo application", a "SceneList application" and a "ScenePlay application".

"Scenefo" means scene information.

"SceneList" means a list obtained by collecting items of scene information.

"ScenePlay" means reproduction using scene information.

### <"Scenefo">

As shown in FIG. 1, "Scenefo" is the function of providing scene information on a Interest scene being reproduced. A tag list (a registered trademark) used hereinafter is, for example, a company-created tag list provided by a metadata maker (hereinafter, sometimes referred to as a "formal tag list" to distinguish between a company-created tag list and a user-created tag list). In addition, a user-created tag list created by the user may be used.

As shown in FIG. 1, with this system, the following services can be offered by the following processes:
0. Tag list entry
1. Content reproduction
2. "Scenefo" startup
3. Transmission and reception of company-created tag list
4. Merchandise presentation (display)
5. Merchandise selection (input operation)
6. Merchandise page offering (display)

### <"SceneList">

As shown in FIG. 2, "SceneList" is the function of selectively viewing only the scenes the user wants to view during playback. The user selects a desired scene from a desired one from various tag lists, including a user-created tag list, a "tag bot" tag list, and a company-created tag list provided by a metadata maker, and views the selected one:
10. Tag list entry
11. Content reproduction
12. "SceneList" startup
13. Transmission and reception of a list of tag lists
14. Tag list selection (input operation)
15. Transmission and reception of a tag list
16. Tag jump

### <"ScenePlay">

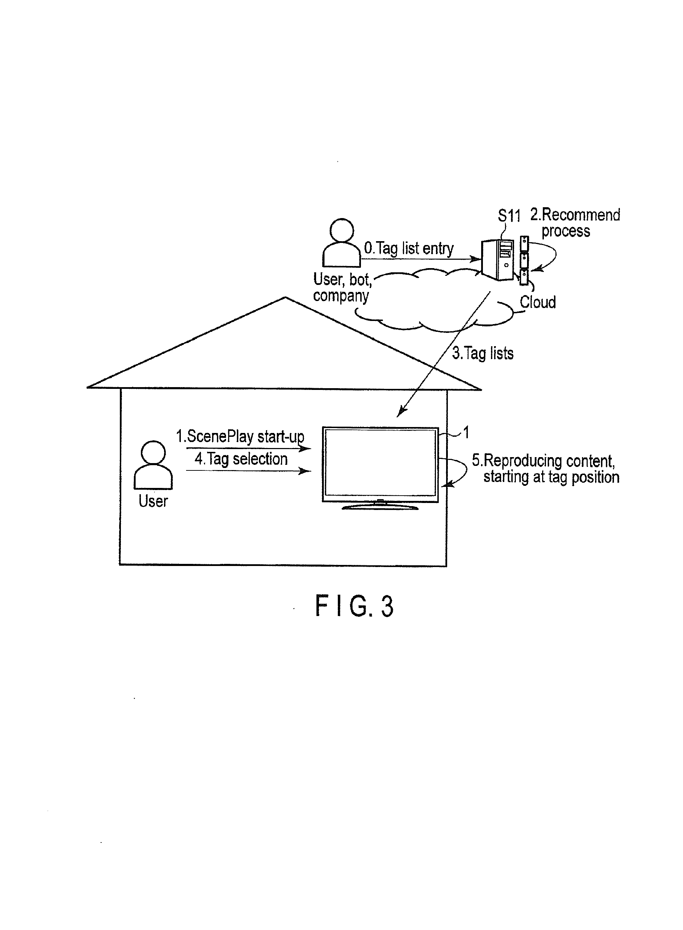

As shown in FIG. 3, "ScenePlay" is the function of enabling the user to search a large number of items of scene information on reproducible video content for scenes the user is interested in and view them. The user finds Interest ones from the recommended scenes, selects the Interest ones, and views them. Usable tag lists include various tag lists, including a user-created tag list, a "tag bot" tag list, and a company-created tag list provided by a metadata maker.
20. Tag list entry
21. "ScenePlay" startup
22. Recommend process
23. Transmission and reception of a tag list
24. Tag selection (input operation)
25. Content playback from tag position

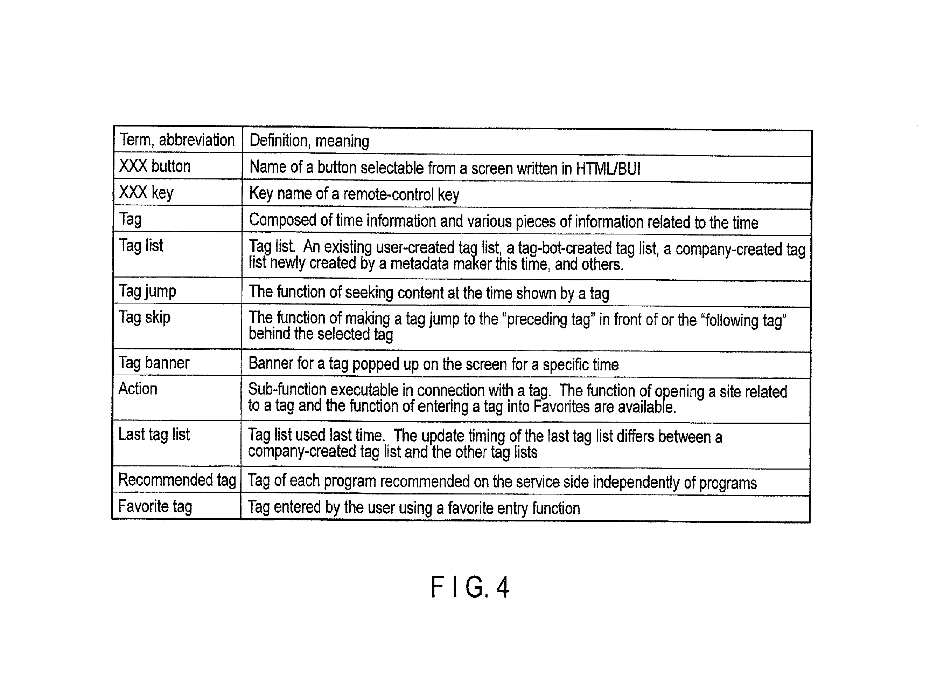

FIG. 4 shows a list is indicated that "describes the definitions", "meanings of terms" and "abbreviations" each used in an embodiment.

Hereinafter, as for the description "button" means a representation that is mostly displayed on a screen or a display part or a display area on a touch-panel using the Hypertext Markup Language (HTML), Browser User Interface (BUI), or the like and that, when, for example, "Chosen" or the like is entered as a control input, can output either an "ON" or an "OFF" control signal or output an "ON" control signal each time a signal is input. In addition, as for the description "key" means a key itself provided to a remote controller (remote-control unit) shown in FIG. 25 as an example. Therefore, unless otherwise noted, when a control input is specified from a "button", a "button" is selected with four direction arrow keys on the remote-control unit that can move the cursor "up", "down", "right" and "left" and then a control instruction is input with "Chosen" key, thereby completing the input (selection). In addition, as for focuses (focus blocks) for which block representations, called "bar", for example, with an arbitrary number of display areas themselves having "button" functions are displayed, the display position of a block representation to be displayed (selected) can be changed, the display is, for example, highlighted by moving the display position with the arrow keys (to change the display position), and the "Chosen" key (button) is pressed to activate or execute the corresponding function, any one of the focuses is selected with the four direction arrow keys and then a control instruction is input with the "Chosen" key, thereby completing the input (selection). As described later, concerning the "Blue" button, "Red" button, "Green" button, "Yellow" button, "Return" button, "Chosen" button, "Scenefo", "SceneList", "Interest!" and "Nice!", and the like in the embodiment, "keys" corresponding to "buttons" displayed on the screen (display) are provided, which enables a control input corresponding to a "button" displayed on the screen to be input (specified) directly with a "key" operation on the remote-control unit.

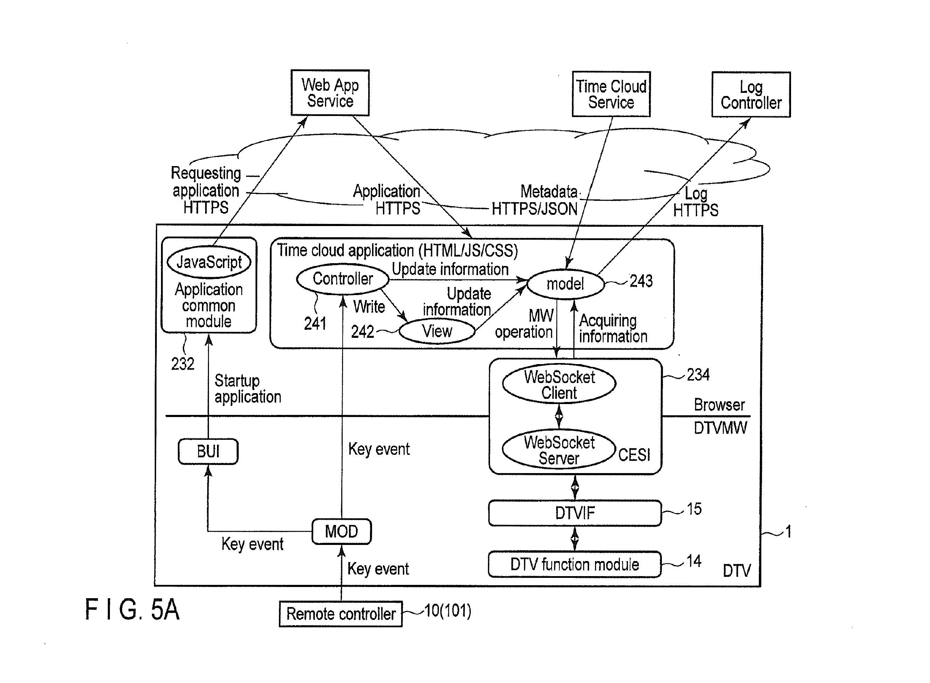

FIG. 5A shows a software configuration according to the embodiment.

A time cloud application (HTML/JS/CSS) is broadly composed of a "Controller" 241 that performs a key (core) event process, a "View" 242 that performs screen display, and a ""model" 243 that acquires information from a DTV MW (a path between the application and a browser) or a server or operates the DTV 1.

Various DTV functional modules 14 include not only a time cloud module that realizes the "Scenefo", the "SceneList" and the "ScenePlay" functions but also a recording and reproducing (data processing) module that realizes the reproducing and recording of a program (content), the basic functions of the DTV 1, and a search module that retrieves content, scenes, or the like.

The metadata server manages program metadata information necessary to realize the "Scenefo", "SceneList" and the "ScenePlay" functions in the time cloud service. Metadata used in the service is acquired from a metadata creation server (or a user-created tag list) at a metadata provider, a metadata maker (shown in FIG. 1). The metadata server creates scene information representing detailed information on a scene in a program using the acquired metadata and transmits the created information to a client terminal (DTV) 1.

In FIG. 5A, an overall configuration of a DTV 1 to which the information processing apparatus and the information processing method according to the embodiment have been applied. The basic functions (including television signal reception, demodulation, control signal processing, 3-D-related signal processing, recording, audio processing, video processing, and a display function) of the DTV 1 are collectively called a DTV function block (or module) 14. The DTV function block 14 is connected to an information processing apparatus 222 via a DTV interface 15. The information processing apparatus 222 may be referred to as a browser section.

In the embodiment, the information processing apparatus 222 includes a cloud application module 231, an application common module 232, and a socket module 234. This classification is not restrictive. The cloud application module 231 may be defined as the information processing apparatus 222.

The socket module 234 includes a server web socket viewed from the DTV interface 15 and a client web server viewed from the browser.

The cloud application module 231 includes an overall controller 241, a view control module 242, and a model 243. The overall controller 241 performs various event processes in response to a command or an instruction. The overall controller 241 controls the view control module 242, thereby realizing various drawing processes. The view control module 242 can obtain various images and control signals in the aforementioned screen. The images and control signals based on the operation of the view control module 242 pass through, for example, the model 243 and socket 234 and are displayed as images and control buttons on the display module of the TV apparatus.

The model 243 can access a server, acquire information from a server, transmit information to a server, operate a DTV, and receive data from the DTV 1. Therefore, the model 243 can receive a message from the DTV 1 and transmit the message to the server. In addition, the model 243 together with the view control module 242 can display the message received from the server on the screen of the display module of the DTV 1. As for servers, there are an application service server, a time cloud service server, and a log collector server. There are still other servers (not shown).

The user can manipulate the remote controller 10 (shown in FIG. 25A) or 111 (shown in FIG. 25B) to control the DTV 1 and information processing apparatus 222. A manipulate signal from the remote controller 10 or 111 is distributed at a moderator 12. A key event distributed for use with the cloud application module 231 is input to the overall controller 241. A key event distributed for use with the application common module 323 is input to the application common module 232 via a browser interface 13. The application common module 232 can request a specified application from an application server according to an application request command. The application sent from the application server is taken in by the cloud application module 231 via the model 243. The log collector server can collect logs used in the information processing apparatus 222 and other connection devices.

The time cloud service server can be connected to other various servers and other information processing apparatuses via the network. The time cloud service server can send various service data items to the information processing apparatus. The time cloud service server can relate video content to scene information or a tag list created by a metadata maker or a user. The related data items are arranged on, for example, a table.

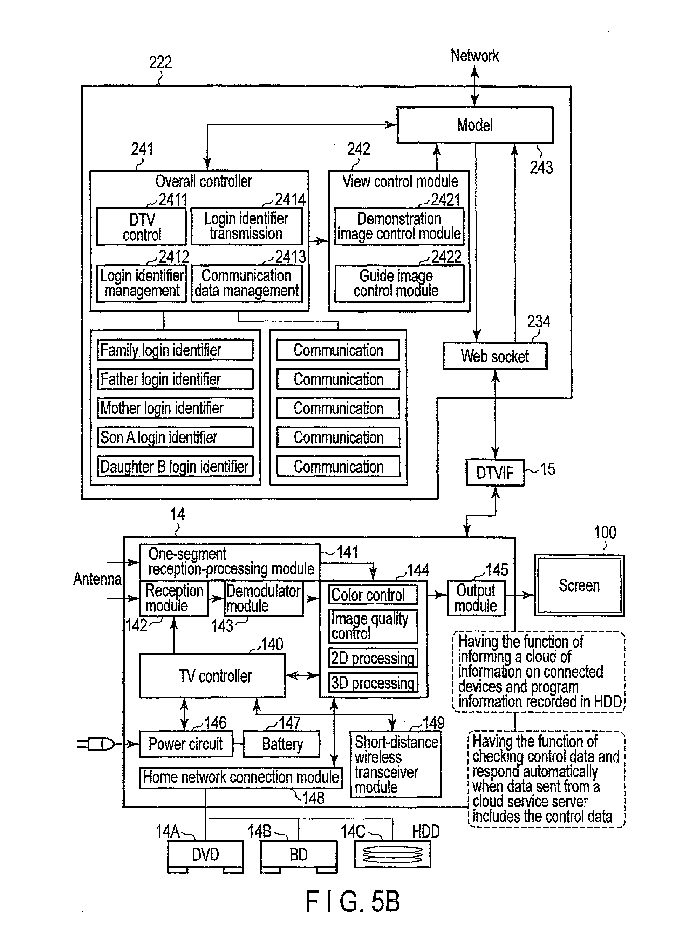

Each block and its operation (including the aforementioned operations and operations described below) shown in FIG. 5A and shown in FIG. 5B may, of course, be realized by a set of instructions constituting software (also referred to as a program). Of course, a processor or a central processing unit (CPU) for realizing data processing with software may be incorporated in each block of FIGS. 5A and 5B. The software, which is stored in a memory (storage medium), can be upgraded. The data (software) in the memory can be read by a computer.

The DTV 1, which includes a plurality of digital tuners, can receive a plurality of channels at the same time. When signals on a plurality of channels have been demodulated, a plurality of streams are obtained. Each stream includes packets of a television program, a control signal, and the like. The streams of a plurality of programs on a plurality of channels are recorded into, for example, a hard disk drive (HDD) connected via a USB connection cable. The HDD can also record management information for managing program information on recorded programs.

In FIG. 5B, a configuration of the information processing apparatus 222 and DTV function block 14 together with the relationship between them. The overall controller 241 includes a DTV control module 2411, a login identifier management module 2412, a communication data management module 2413, and a login identifier transmission module 2414. The DTV control module 2411 may control the DTV function block 14 on the basis of a user operation or control various TV function blocks 14 on the basis of control data from the time cloud service server. When a login identifier has been input, the login identifier management module 2412 controls the storage of the login identifier and manages family and individual identifiers as table data. The communication data management module 2413 manages communication data so that the communication data items may correspond to the individual login identifiers. For example, when the user logged in has accessed an external server, the communication data management module 2413 manages its history data. The history data includes an access destination address, transaction data, and the like. The communication data management module 2413 can also classify and store data items sent from the cloud service server and use the data as display data.

The login identifier transmission module 2414 transmits the logged-in login identifier to the cloud service server. The cloud service server manages login identifiers from many users and uses them when providing guide images.

The view control module 242 includes a demonstration image control module 2421 and a guide image control module 2422. This enables a demonstration image and a guide image to be provided for the DTV 1 side.

The DTV function block 14 includes a one-segment reception-processing module 141 that receives a signal from an antenna, a reception module 142 that receives satellite broadcasting and terrestrial digital broadcasting, and a demodulator module 143. The reception module 142 and demodulator module 143, which include a plurality of tuners, can receive broadcast programs on a plurality of channels simultaneously and demodulate them. A plurality of demodulated program signals can be converted into a DVD format at a DVD device 14A and recorded onto a digital versatile disc. Alternatively, the demodulated program signals can be converted into a BD format at a BD device 14B and recorded onto a Blu-ray disc. Moreover, in any stream, the demodulated program signals can be recorded onto a hard disk with a hard disk drive 14C. The DVD device 14A, BD device 14B, and hard disk drive 14C are connected to the DTV function block 14 via a home network connection module 148. The hard disk drive 14C may be of a type to be connected via a USB cable. The hard disk drive 14C may be based on a method capable of recording all the programs on a plurality of channels (e.g., set six channels) simultaneously for, for example, about one to three weeks. This type of function may be referred to as a time shift function. In addition, the DTV function block 14 may be configured to include more hard disk drives.

The network connection device and recorded program information can be grasped by a TV controller 140 and transmitted to the cloud service server 411 via the information processing apparatus. In this case, the time cloud service server 411 can grasp the user's home network connection device and recorded program information. Therefore, when each scene is reproduced on the basis of scene list information, the cloud service server 411 can specify even a home connection device in which the various scenes have been recorded.

A program signal demodulated in the DTV function block 14 or a program signal reproduced from a recording medium, such as a DVD, a BD, or an HD (hard disk), is subjected to various adjustments (including brightness adjustment and color adjustment) at a signal processing module 144 and is output to the screen 100 of the display module via an output module 145.

The DTV function block 14 includes a power circuit 146. The power circuit 146 can switch between a use situation of commercial power and a use situation of a battery 147 as needed. The switching between the use situations includes a case where the user performs the switching forcibly by operating the remote controller and a case where the switching is performed automatically on the basis of external information.

The cloud service server can transmit a control signal to bring the TV apparatus into a 3D processing state automatically. Furthermore, the cloud service server can transmit an audio control signal and/or an audio signal corresponding to a scene to the TV apparatus. Moreover, according to a scene, the cloud service server can include image adjustment data in extended linkage data and transmit the resulting data.

The DTV function block 14 includes a short-distance wireless transceiver module 149. The DTV function block 14 can transmit and receive data to and from a mobile terminal via the short-distance wireless transceiver module 149. The mobile terminal can request an operation image from the DTV function block 14. When the DTV function block 14 has been requested to give an operation image, it can transmit a guide image to the mobile terminal. The user can control the information processing apparatus making use of the guide image on the mobile terminal.

The DTV function block 14 can check control data sent from the cloud service server and reflect the data in an operation state automatically.

Therefore, with the system, the information processing apparatus basically transmits data (control signal corresponding to a scene information key, a scene list key, and a scene play key) acting as a trigger to a server via the network connection module in response to a first operation signal from the user. Next, the information processing apparatus acquires extended linkage data sent back on the basis of the trigger data, classifies a first control signal (instruction) for automatic control included in the extended linkage data and a second control signal (instruction) corresponding to the second operation signal from the user, and stores them. They are stored in the overall controller or model. Then, the information processing apparatus can perform an autonomic operation on the basis of the first control signal (instruction) and/or a heteronomous operation on the basis of the second control signal (instruction). The autonomic operation means operating in an autonomic manner. For example, this means obtaining a display image in the area 106 or controlling the DTV function block 14. The heteronomous operation means waiting for a user operation and responding to a second operation signal when the second operation signal from the user is input. This operation includes the operation of responding to merchandise selection, the operation of responding to tag list selection, and the operation of responding to scene list selection. The extended linkage data further includes display data to be displayed. The display data includes various messages and albums. When having received a power-saving instruction from the time cloud service server, the DTV function block 14 can perform a power-saving operation. The power-saving operation includes, for example, the change of a full-segment reception state to a one-segment reception state, the reduction of the display area of the display module, and the change of commercial power use to battery use.

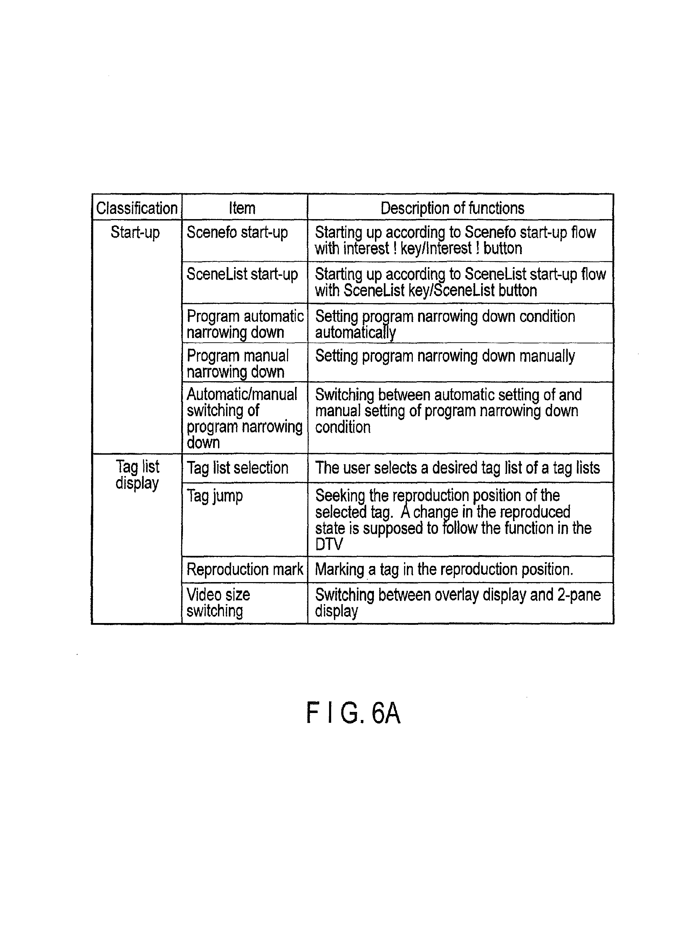

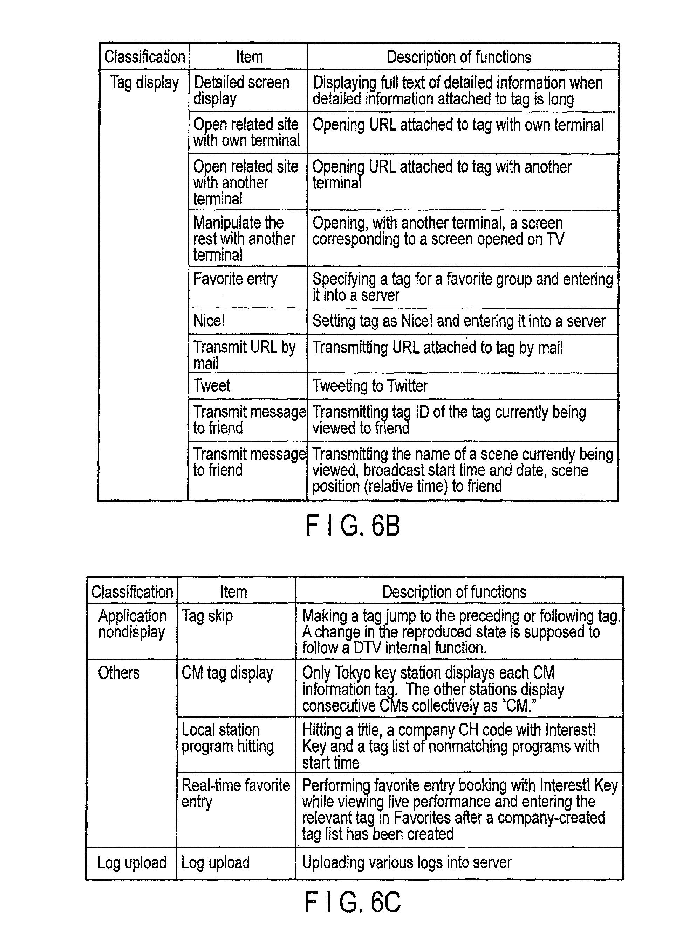

FIGS. 6A, 6B and 6C are tables that each describe an example of a Scenefo and a SceneList function (process).

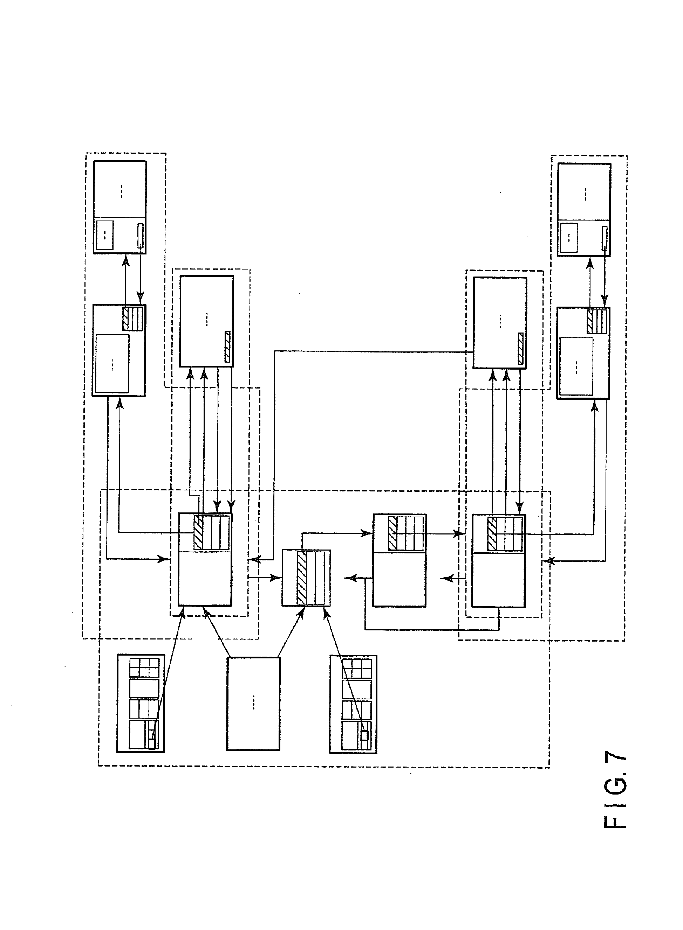

FIG. 7 shows an example of the transition of Scenefo and SceneList screens (representations).

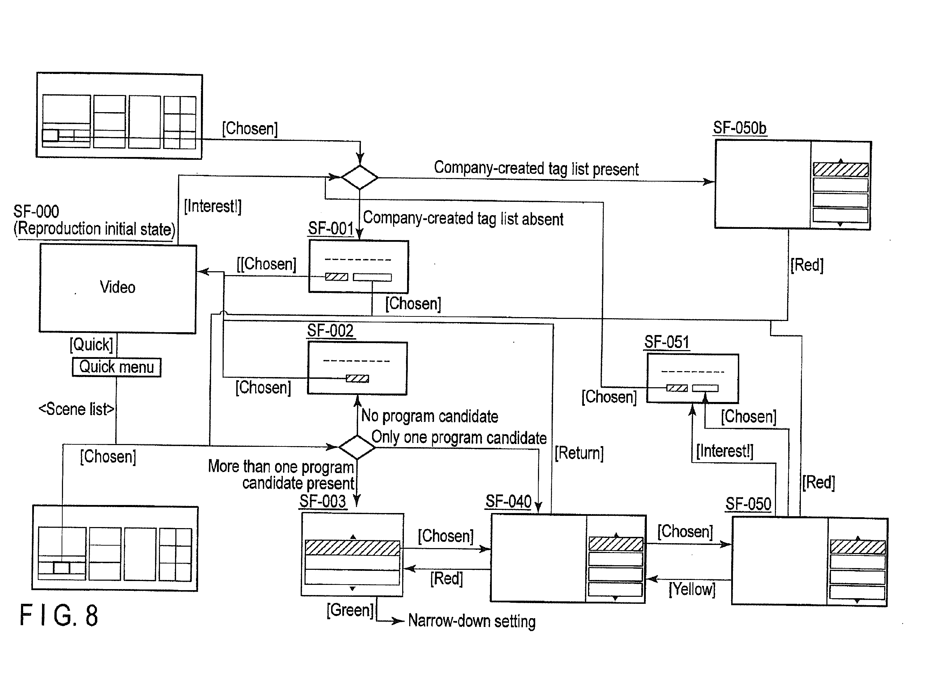

When video content has been reproduced (on a reproduce initial screen) on the DTV 1, neither a Scenefo nor a SceneList application has been started yet. The user starts either the Scenefo or SceneList application. At this time, a browser (DTV MW or a prepared customized portal [for the DTV]) is also started at the same time the application is started. The transition of application start-up screens (representations) is shown in FIG. 8. At the time of screen (representation) transition, data related to a tag list is acquired from a metadata server.

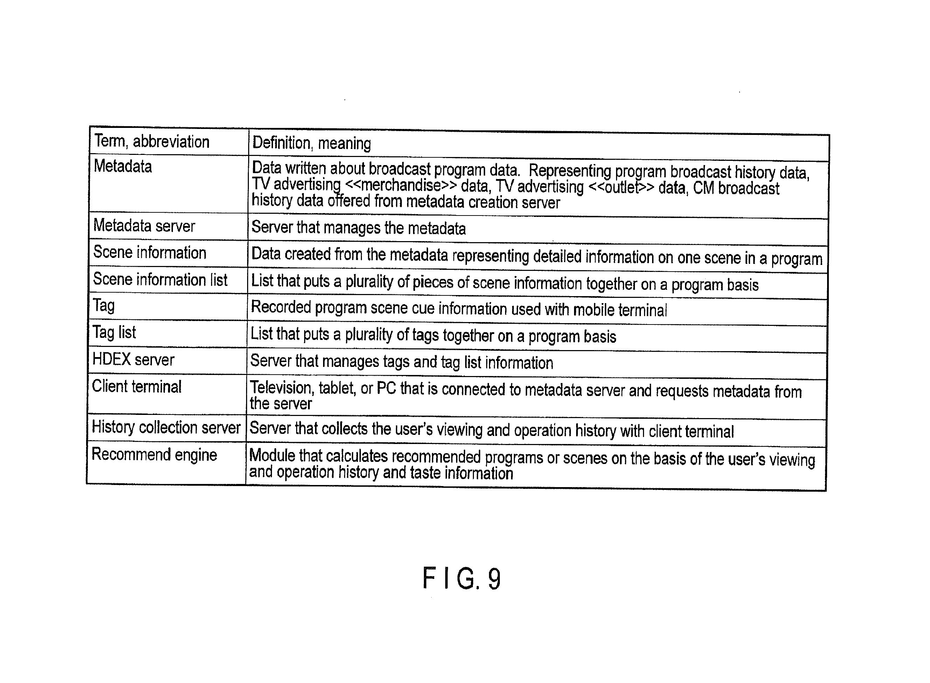

FIG. 9 is a table that describes the definitions and meanings of terms and abbreviations used in the embodiment.

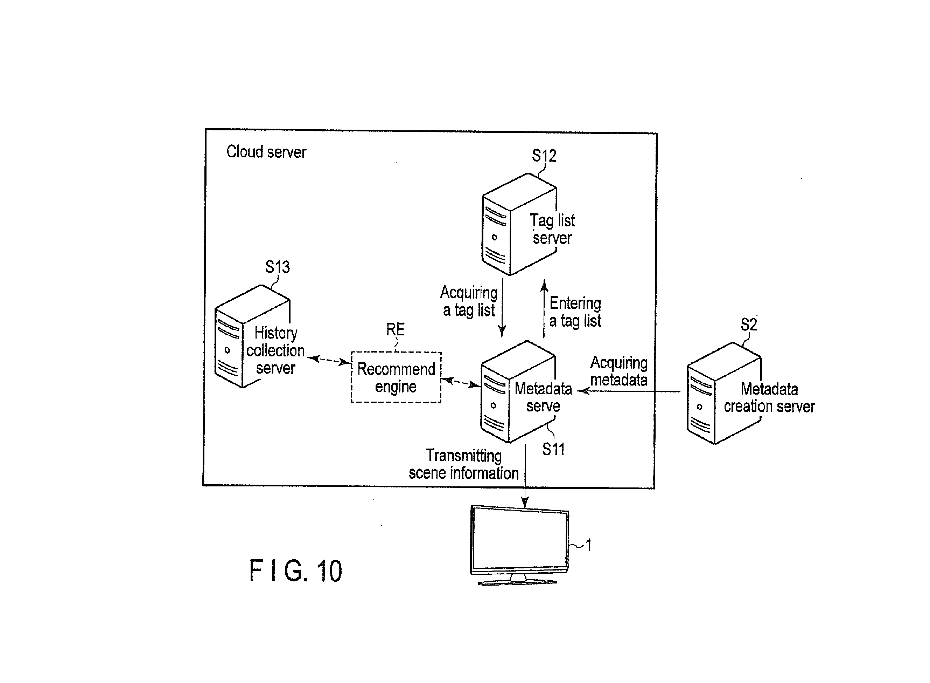

FIG. 10 shows the linkage between various servers according to the embodiment.

A metadata server S11 acquires metadata from a metadata creation server S2 and stores it in a database of the metadata server S11. The metadata server S11 converts a part of the acquired metadata into a format compatible with a tag processing application installed in the DTV 1 or a mobile device 2 and enters the converted metadata into a tag list server S12 that manages tag list information. The metadata server S11 converts necessary metadata into scene information at the request of a client terminal and transmits the scene information to the client terminal. In addition, the client terminal can acquire user-created tag list information used in the time cloud service from the tag list server S12 by way of the metadata server S11.

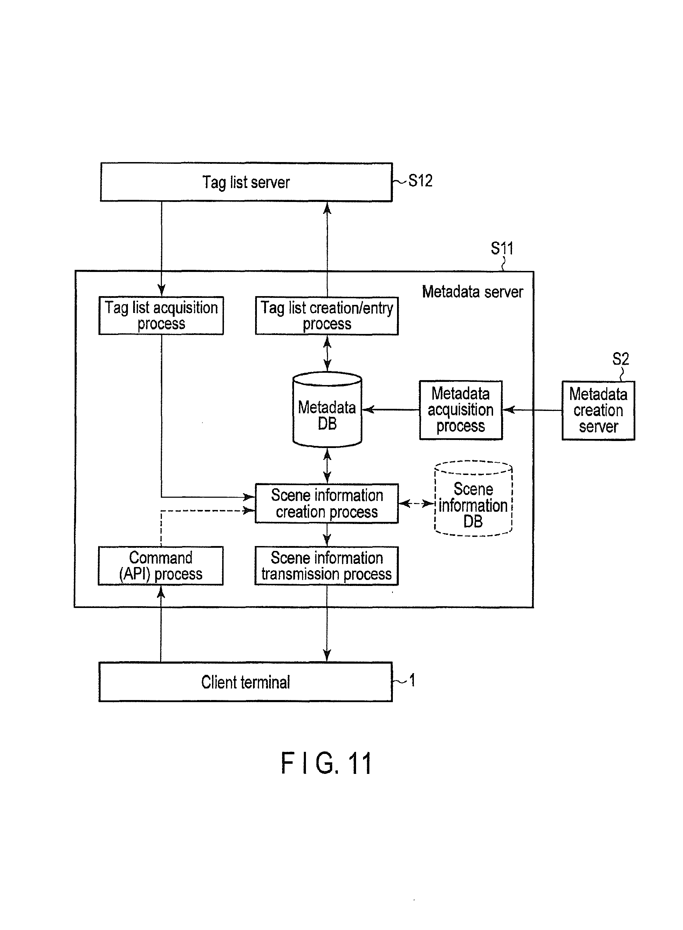

FIG. 11 schematically shows a configuration of a metadata server according to the embodiment.

The functions provided by the metadata server will be described.

### (1) Command (web API) process

The metadata server S11 acquires various data items and provides them to a client terminal. For example, the metadata server S11 acquires the following data items and offers them to the client terminal.

### <Acquiring a scene information list>

The metadata server S11 acquires a scene information list for programs that satisfy a specified condition. When there are a plurality of scene information lists for programs that satisfy the specified condition, the metadata server S11 acquires all of them. When there is no scene information list for programs that satisfy the specified condition, the metadata server S11 informs the user of this. A user-created tag list entered in the tag list server S12 may be included in the scene information list to be acquired.

### <Acquiring a list of programs including a scene information list>

The metadata server S11 acquires "a list of programs" including a scene list satisfying the specified condition. A program including a user-created tag list entered in the tag list server S12 may be included in the list of programs to be acquired.

### <Acquiring a list of scene information lists>

The metadata server S11 acquires "a list of scene information lists" entered in a specified program. A list of user-created tag lists entered in the tag list server S12 may be included in the list of lists to be acquired.

### <Acquiring a scene information list (ID specified) >

The metadata server S11 acquires "a scene information list" with a specified ID. When a tag list ID has been specified, the metadata server S11 acquires a user-created tag list that has been entered in the tag list server S12 and that differs from a "formal tag list" created by a user identified by a tag list ID.

### <Searching for scene information>

The metadata server S11 acquires a scene information list including scene information that satisfies a specified search condition. The search condition is such that any keyword the user inputs can be specified.

### <Acquiring recommended scene information>

The metadata server S11 acquires "recommended scene" information calculated by a recommend engine RE (shown in FIG. 10).

### <Acquiring favorite scene information>

The metadata server S11 acquires "favorite scene" information entered by the user managed by a server.

### (2) Metadata acquisition process

The metadata server S11 acquires metadata provided by the metadata creation server S2. To acquire metadata provided by the metadata creation server S2, Web API provided by the metadata creation server S2 is used.

### (3) Tag list creation/entry process

The metadata server S11 enters program broadcast history data in metadata as a tag list in the tag list server S12. The entered metadata, which is compatible with an existing tag list, can be used by an application on a terminal (mobile device side).

### (4) Scene information creation/transmission process

The metadata server S11 creates scene information on the basis of metadata acquired from the metadata creation server S2 and transits the scene information to a client terminal. The processes performed in creating scene information will be described below.

### (4.1) Drawing program information

A client terminal (DTV) 1 transmits (a) program name (or identification data, such as program ID), (b) program broadcast time and date, (c) channel number.

The metadata server searches a database in the metadata server for an appropriate program on the basis of (a) program name, (b) program broadcast time and date, (c) channel number received from the client terminal 1. If the appropriate program in which one or more items of scene information have been entered exists, one or more items of scene information on the program are created and then transmitted to the client terminal 1.

If more than one appropriate program exists, the metadata server transmits all the candidates to the client terminal 1. If there is no appropriate program, the metadata server transmits a message to that effect to the client terminal 1.

That is, the client terminal 1 transmits content identification data (including the program name, program broadcast time and date, and channel number) to the metadata server and receives a plurality of items of scene information corresponding to a plurality of scenes of the content from the metadata server.

### (4.2) Searching for scene information

The metadata server searches the database in the metadata server for metadata information that satisfies the search condition received from the client terminal 1 and transmits a scene information list including the appropriate metadata information to the client terminal 1. Metadata to be searched for includes program broadcast history data, merchandise data, store data, and commercial message broadcast history data.

### (4.3) Creating scene information

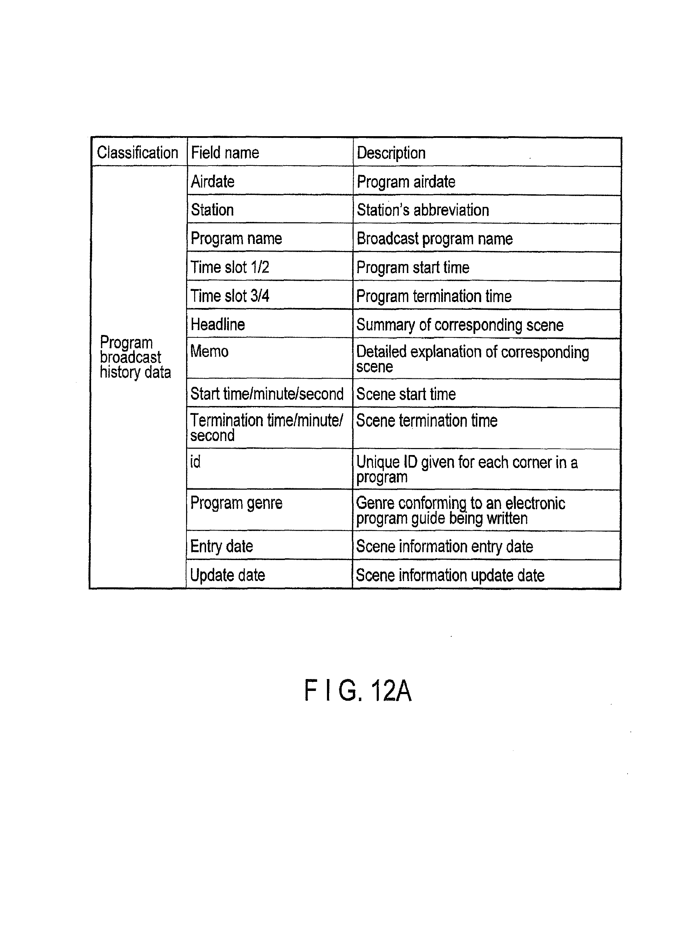

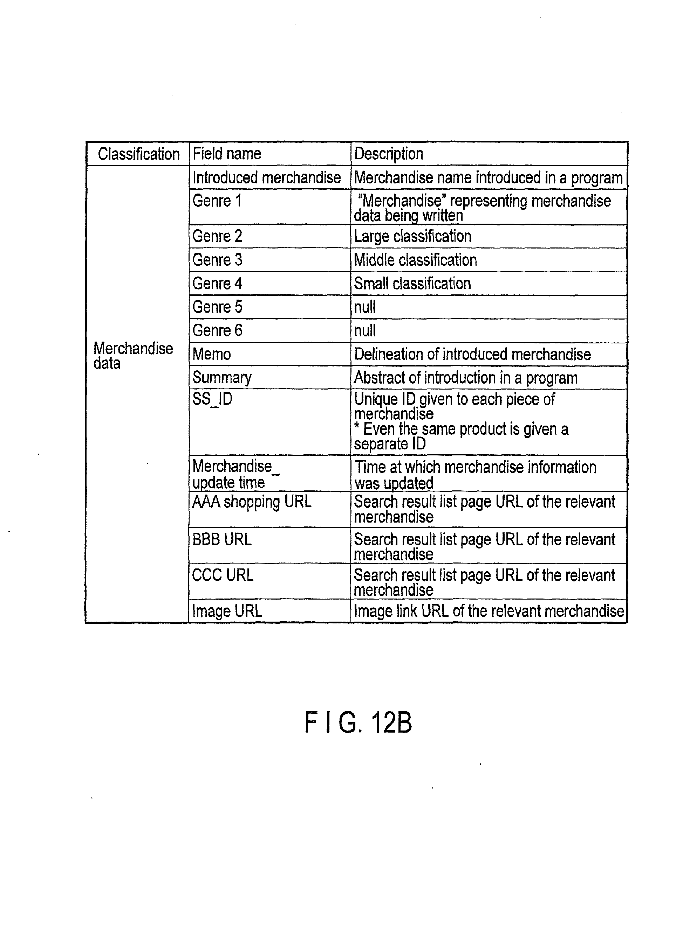

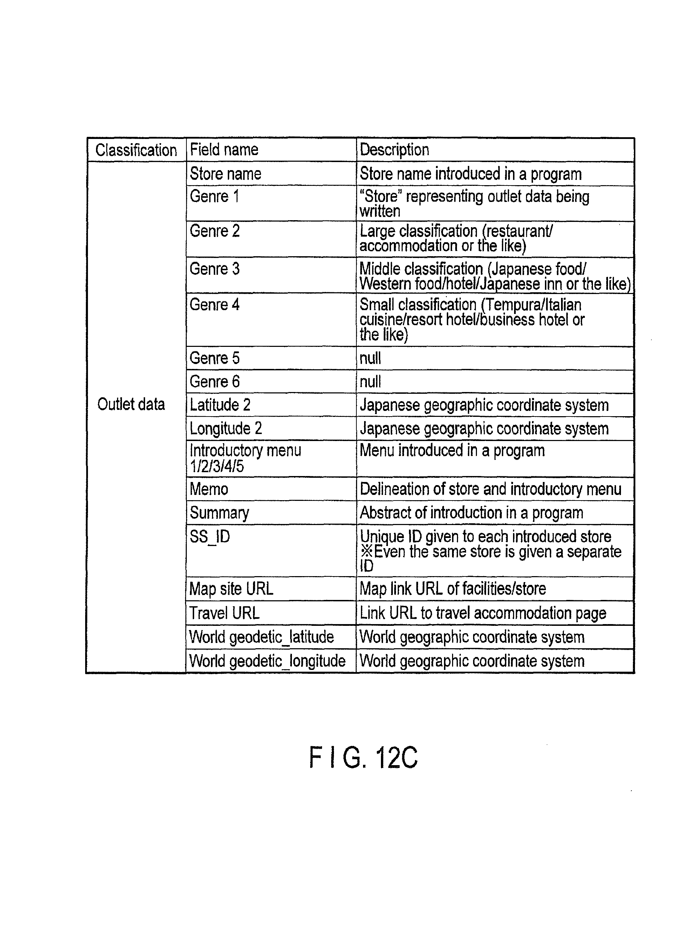

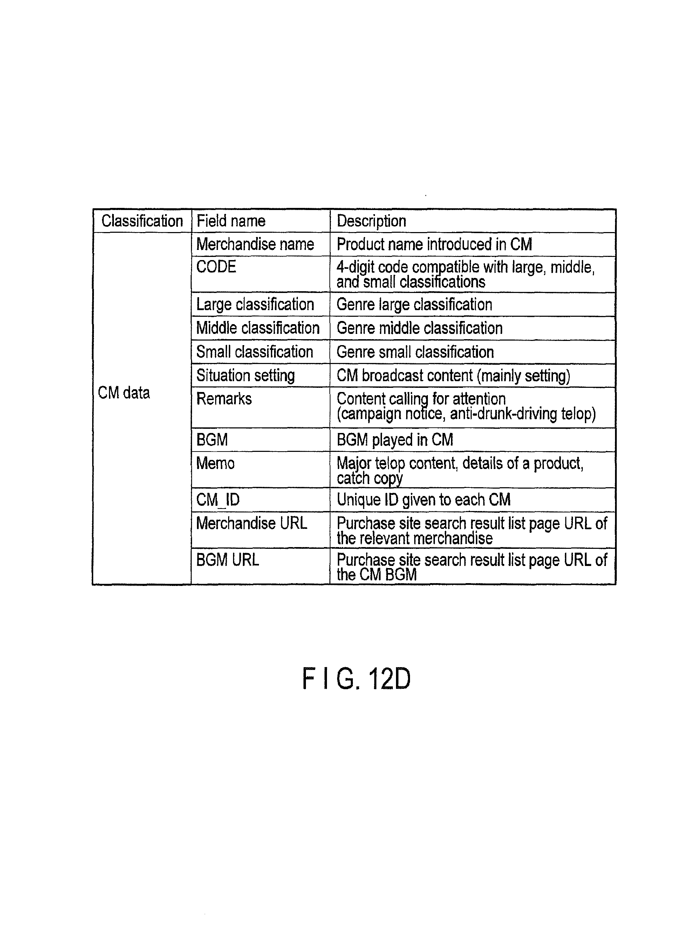

The metadata server correlates the broadcast history data, merchandise data, store data, and commercial broadcast history data stored in the database of the metadata server with one another, thereby creating scene information. A list of metadata items included in the created scene information is shown in FIGS. 12A, 12B, 12C, and 12D.

Neither merchandise information nor store information may exist in an item of scene information. A plurality of merchandise data items and store data items may be correlated with one another in an item of scene information.

### (4.4) Tag list information and scene information merging process

Tag list information managed by a tag list server is merged with scene information created in the metadata server at the metadata server at the request of the client terminal 1 and the merged information is transmitted to the client terminal 1. Since tag termination time (an time information of ending the tag) has not been written in tag information acquired from the tag list server, the metadata server performs the process of setting the start time of a tag following the attention tag as the termination time of the present tag (the tag currently being referred to) at the request of the client terminal 1.

### (4.5) Tag list acquisition process

The metadata server acquires tag list information entered in the tag list server at the request of the client terminal 1, performs necessary processes, and transmits the resulting information to the client terminal 1. To acquire data from the tag list server, the API provided by the tag list server is used. Suppose data the metadata server acquires from the tag list server is about tags and tag lists.

### (4.6) Transmission format conversion process

The metadata server converts tag list information in an XML format acquired from the tag list server into a JS (ON) format at the request of the client terminal 1 and transmits the resulting information to the client terminal 1.

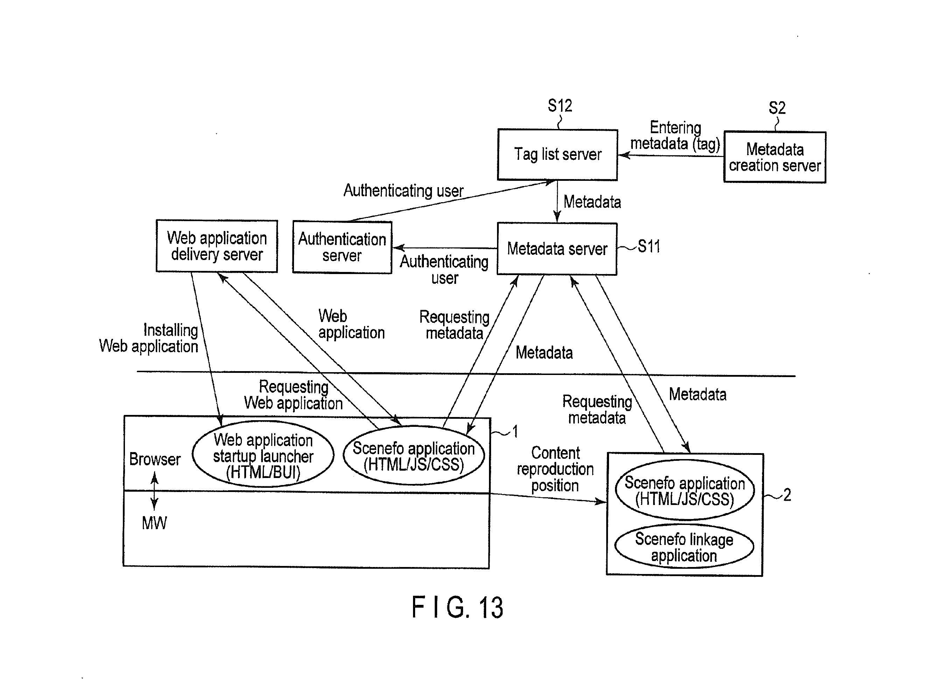

FIG. 13 shows an example of the details of the system configuration according to the embodiment.

As explained above, the system is composed of various servers and a client terminal (for example, DTV) 1. In addition, the system enables a mobile device (i.e., a tablet computer or a smart-phone) 2 to be used.

The DTV 1 senses that each of various buttons and keys is pressed (or a control signal is input) and executes an operation according the control input specified by the pressed button or key. For example, on sensing that the "Interest!" button has been pressed (or the "Interest!" key on the remote control is pressed) while a program is being reproduced, the DTV 1 accesses information ("Scenefo") on "a scene" including the point in time (the moment), opens various applications, and offers services related to "the scene". That is, the "Interest!" button functions as a button for giving an instruction to access information on "a scene" at the time while the program is "being reproduced". That is, on pressing the "Interest!" button, the user can get service corresponding to the "scene" at the time in cooperation between the DTV 1 and the Scenefo application. The "Interest!" button will be explained later with reference to FIG. 22. The "Interest!" button can be used as a means of inputting an instruction to start recording at the time (the moment) for an unrecorded program.

For example, while the DTV 1 is reproducing a plurality of scenes in a program (content) sequentially, when the user has pressed the "Interest!" button, the DTV 1 detects the depression of the button (a scene information request), changes screens (representations), and outputs information (scene information) related to the scene. Each time the scene changes, the DTV 1 sequentially changes items of scene information to be output.

For example, when reproducing a recorded program, the DTV 1 outputs a first item of scene information corresponding to a first scene being reproduced among a plurality of scenes in the program, outputs a second item of scene information corresponding to a second scene before the first scene together with the first item of scene information, and outputs a third item of scene information corresponding to a third scene after the first scene together with the first item of scene information. The DTV 1 outputs the first, second, and third items of scene information together with a playback video of the program and outputs the first item of scene information and the second and third items of scene information in different display formats. For example, the DTV 1 outputs the first item of scene information in a first display color and the second and third items of scene information in a second display color.

Furthermore, scene information will be explained in detail.
<1> On detecting the selection of the output (displayed) scene information, the DTV 1 outputs a link (service information) related to a scene on which scene information is based. The user can buy merchandise related to the scene or reserve a store that offers services related to the scene via a link (for example, the URL of a merchandise purchase site or the URL of a reservation site of a specific pre-address header) output (displayed) to the screen (on the display module) of the DTV 1. In addition, the user can transfer the link related to the scene to a car navigation system or open (display/indicate) a page of a map to relate to the scene.
<2> On detecting the selection of the output (displayed) scene information, the DTV 1 opens an application on a mobile device related to a scene on which scene information is based.
<3> On detecting the selection of the output (displayed) scene information, the DTV 1 enters, into Favorits, information on a scene on which scene information is based.
<4> On detecting the selection of the output (displayed) scene information, the DTV 1 outputs a mail transmission screen for transmitting, by mail, information on a scene on which scene information is based and transmits mail in response to a specific selection or an input operation.
<5> On detecting the selection of the output (displayed) scene information, the DTV 1 transmits, for example, to a previously entered friend, information on a scene on which scene information is based, in the form of a message.

The "Nice!" button indicating a user evaluation of a program can be pressed at different times. That is, on detecting the depression of the "Nice!" button (a scene information request) while a program is being reproduced, the DTV 1 can access information on "a scene" (scene information) at the time and make a database of information on "a scene".

Information indicating the depression of the "Nice!" button can be caused to correspond to a scene tag, a list, a program, or a specific scene.

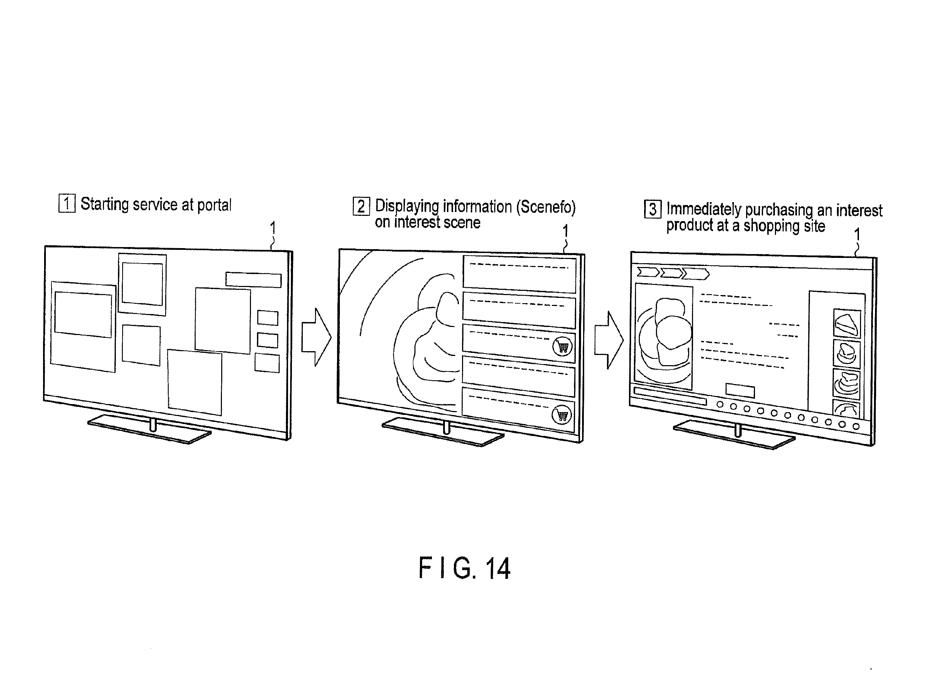

As shown in FIG. 14, the DTV can start service from a portal (an initial display screen in a state where the "Scenefo", "SceneList" and "ScenePlay" functions in the time cloud service to which the embodiment has been applied have been activated), display information on an interest scene and enable the user to buy an interest item of merchandise at a shopping site immediately.

As described above, with the system of the embodiment, pertinent information suited for each of small scenes can be presented timely.

Hereinafter, explanation will be given in concrete terms.

### <Operational Specifications>

On detecting that the "Scenefo" key has been pressed while Personal Video Recording (PVR) content or content recorded with a time-shift machine (recorder) is being reproduced, the DTV 1 displays a list of "Scenefo", focusing on the nearest neighboring Scenefo in front of the present reproduction position. The list display may be realized by using another input replacing the "Scenefo" key (or button) as a trigger.

The time shift machine records (or records all the) broadcast content on a plurality of channels (for example, six channels) for a specific period of time before the present day (for example, the past 15 days). That is, when the time shift machine has recorded all the broadcast content, the user can view the programs broadcast in the past (for example, for the past 15 days) at any time.

For example, in a "Scenefo" list, a part (about two lines) of "Scenefo" is displayed in list form.

When there is no Scenefo (program/content), the dialogue ""Scenefo" is not found. Do you want SceneList displayed?" (i.e., a message that prompts the user to select) is displayed. If Yes (at the user's display request), control proceeds to a "SceneList" selection screen to display "SceneList".

On detecting that "Up" or "Down" key has been pressed (i.e., an up-down movement over a display field (a division representation) on which the user is focusing) while the Scenefo list is being displayed, the DTV 1 moves the cursor on an anyone of the "Scenefo" (bar), i.e., the DTV 1 performs display control so that the display field (bar) on which the user is focusing may move to the next level (bar) above or below the present one.

On detecting that the "Chosen" key has been pressed with the cursor hitting against any Scenefo (i.e., while the user is focusing on a specific Scenefo field), the DTV reproduces a scene corresponding to the Scenefo hit by the cursor from the beginning (reproduce jump).

On detecting that the "Return" or "End" or "Clear" key has been pressed while the Scenefo list is being displayed, the DTV closes the Scenefo list. (When any one of the "Blue" key, "Red" key, "Green" key, and "Yellow" key has been caused to function as a "Return" button or key, pressing the button (key) enables the process to be terminate (in a similar manner).

On detecting that "Right" key has been pressed with the cursor hitting against any "Scenefo" while the "Scenefo" list is being displayed, the DTV displays detailed information on "Scenefo". In this case, the detailed information on Scenefo includes all of Scenefo. That is, the detailed information includes action buttons ("button/buttons" providing special functions according to displayed content corresponding to the content of "Scenefo").

For example, the detailed information includes action buttons (representations) corresponding to the following functions:
"Enter this scene into Favorites"
"Nice!"/"Cancel Nice!"/"Nice! with a count"
"Open a shopping site on TV"
"Open a shopping site with application"
"Transmit this "Scenefo" by mail", and

while the user is focusing on the representation (or the user has selected the button), the user presses the "Chosen" button, thereby enabling the corresponding function to be activated or the corresponding operation to be started (performed).

On detecting that the "Enter this scene into Favorites" key has been pressed, the DTV 1 enters a corresponding scene in Favorites (this can be used in a case where the user wants to do bulk buying later or view this scene again later).

The server manages a favorite "Scenefo" for shared usage with TV/applications or the like.

When the "Nice!" button has been pressed, the DTV 1 causes a log representing "Nice!" to correspond to "Scenefo" and uploads the resulting log to the server. As a result, the count of "Nice!" caused to correspond to "Scenefo" increases.

On detecting that the "Open a shopping (product selling) site on TV" button has been pressed, the DTV opens a shopping (product selling) site with the DTV MW (browser).

On detecting that the "Open a shopping (product selling) site with application" button has been pressed, the DTV 1 gives the URL of the shopping site to the application. The application opens the shopping site on the basis of the URL (shown in FIG. 15C).

Even if the DTV 1 has displayed a shopping site, a serious burden of completing the shopping settlement procedure with a remote control or the like of the DTV 1 is imposed on the user. Therefore, as described above, the DTV 1 transmits the URL of the shopping site to the application of the mobile device 2 and informs the user that the shopping settlement procedure or the like will be continued with the application of the mobile device 2. The user can complete the shopping settlement procedure or the like with the mobile device 2 at hand, using, for example, a touch input function of the mobile device 2.

When displaying a shopping site, the DTV 1 accepts the selection of one of a first mode in which a shopping site is displayed on the DTV 1 body and a second mode in which a shopping site is displayed on the mobile device 2. When the user has selected the second mode, the DTV 1 transmits the URL of the shopping site to the application of the mobile device 2 without displaying the shopping site. For example, the DTV 1 transfers the URL of the shopping site to the application of the mobile device 2 by way of a server. On the basis of the received URL of the shopping site, the mobile device 2 displays the shopping site.

While the shopping site has been displayed on the mobile device 2 in place of the DTV 1, all the displays or the like on the DTV 1 may be realized on the mobile device 2. That is, the DTV 1 can transmit not only the URL of the shopping site but also the URLs of all sites to the mobile device 2, enabling the mobile device 2 to display all the sites.

On detecting that the "Transmit this "Scenefo" by mail" button has been pressed, the DTV 1 displays a destination mail address selection screen. The destination mail address selection screen can present mail addresses set in mail reservation or the like as candidates and accept the selection of a mail address. In addition, the destination mail address selection screen can accept the input of a mail address. When the user has selected a mail address and pressed the
"Transmit/Transmitting" button, the DTV detects that a mail address has been selected and the
"Transmit/Transmitting" button has been pressed and transmits a mail.

On detecting that a switching button has been pressed while the "Scenefo" list is being displayed or the details of "Scenefo" are being displayed, the DTV 1 switches between the "Fully image and added overlay "Scenefo"" representation and the "Image and "Scenefo" division" representation called Pane displaying.

On detecting that the "Left" or "Right" key has been pressed while content is being reproduced, the DTV 1 makes a jump "to a representation in front of" or "to a representation behind" in displaying the "Scenefo" or "SceneList" (reproduce jump).

The DTV 1 has a resume function for Scenefo and SceneList and operates on the basis of what has been used last (a specific list of Scenefo or SceneList). In a default (initial) setting, the DTV 1 operates on the basis of Scenefo. When there is no Scenefo and SceneList has never been used while the content is being reproduced, the DTV 1 does nothing (with the resume function deactivated).

On detecting that "using SceneList" button has been pressed while the Scenefo list is being displayed, the DTV 1 can move to a SceneList selection screen.

For example, the DTV 1 enables Scenefo to be used as one of the tag lists from the existing "Tag list use".

In addition, the DTV can display some tag lists, such as only commercials or only merchandize information, from one Scenefo.

On detecting that the "Scenefo" button has been pressed, the DTV 1 displays detailed information on the nearest neighboring "Scenefo" in front of the present reproduction position.

The DTV always displays the nearest neighboring "Scenefo" in front of the present reproduction position.

On detecting that the "Open a shopping site with application" button has been pressed, the DTV receives the URL of the shopping site and opens the shopping site with the browser in the application.

On detecting that the "Favorite Scenefo" button has been pressed, the DTV displays a favorite list and opens the shopping site in response to the act of "Open a shopping site" or the like.

### <Related upload requirements>

### DTV 1:

On detecting that the "Scenefo" key has been pressed in a normal mode, the DTV 1 uploads "Scenefo" in a ("Scenefo" mode start) reproduction position where the "Scenefo" list has been displayed.

The DTV 1 uploads "Scenefo" used to make a "scene jump" from the "Scenefo" list in response to the detection of the "Chosen" key being pressed.

The DTV 1 uploads "Scenefo" used to display the details of Scenefo from the "Scenefo" list in response to the detection of the "Right" key being pressed.

The DTV 1 uploads the URLs or the like of purchase sites, merchandise sites, store sites, or map sites obtained from the details of "Scenefo".

The DTV 1 uploads "Scenefo" corresponding to the details of "Scenefo" on transferring the details of "Scenefo" to the application.

The DTV 1 uploads "Scenefo" corresponding to the details of "Scenefo" on transferring the details of "Scenefo" by mail.

The DTV 1 uploads "Scenefo" for which "Nice!" has been specified (or input, that is, an action button (representation) goes on).

The DTV 1 uploads "Scenefo" entered into Favorites.

### Terminal:

On displaying Scenefo as a result of the "Scenefo" key being pressed, a terminal uploads "Scenefo" corresponding to the reproduction position of "Scenefo".

The terminal uploads the URLs or the like of purchase sites, merchandise sites, store sites, or map sites obtained from the details of "Scenefo".

The terminal uploads Scenefo corresponding to the details of "Scenefo" on transferring the details of "Scenefo" by mail.

The terminal uploads "Scenefo" for which "Nice!" has been specified (or input, that is, an action button (representation) goes on).

The terminal uploads "Scenefo" entered into Favorites.

The terminal uploads a tag list use log treating "Scenefo" as one of the tag lists.

Next, an example of screen transition will be explained.

FIGS. 15A, 15A1, 15A2, 15B, 15C, and 15D show an example of screen transition. FIGS. 16 to 20 show an example of the details of screen transition. FIGS. 21 to 24 each show an example of a screen. These screen transitions are examples of the transitions when, for example, a recorded content is being reproduced. For example, when a list of items of scene information on a program is released to the public before the program is broadcast, these screen transitions may be applied while on-air content is being reproduced.

For example, in a state where the DTV 1 is displaying, for example, a recorded content (a recorded program) reproducing screen in a reproduction initial state or a browser initial state ([SF-000]/[SF-999] in FIGS. 15A, 15A1 and 15A2), when the DTV 1 has detected that the "Interest!" key has been pressed, the DTV 1 displays scene information being reproduced, scene information after reproduction, and scene information before reproduction in list form.

FIG. 21 shows a list representation of scene information. On detecting that the "Interest!" key has been pressed while a recorded content (a recorded program) is being reproduced, the DTV 1 enters, for example, a scene currently being reproduced (reproduction position) into Favorites and further into a cloud-based "Interest!" scene list and informs the Inbox of the cloud menu of a message. In addition, the DTV 1 displays a plurality of items of scene information (scene information currently being reproduced, scene information after reproduction, and scene information before reproduction) in list form. Scene information includes merchandise information icons and the like. The user can view a merchandise information site or a merchandise purchase site according to a scene by just selecting a merchandise information icon.

In a state where the DTV 1 is displaying, for example, a broadcast content (an OA (on-air) program) reproducing screen (real-time reproducing screen) in a reproduction initial state or a browser initial state ([SF-000]/[SF-999] in FIGS. 15A, 15A1 and 15A2), when the DTV 1 has detected that the "Interest!" key has been pressed, the DTV 1 enters, for example, a scene (broadcast position) currently being reproduced into a cloud-based "Interest!" scene list as shown in FIG. 22 and informs the Inbox of the cloud menu of a message. In addition, the DTV 1 starts to record a scene currently being reproduced and subsequent ones.

As described above, the processes based on the ON (press) of the "Interest!" key are switched according to a reproducing situation. That is, on detecting that the "Interest!" key has been pressed while a recorded content is being reproduced, the DTV 1 displays scene information. On detecting that the "Interest!" key has been pressed while a broadcast content is being reproduced, the DTV 1 starts recording (the DTV 1 functions as a means of inputting an instruction to start recording at the time (moment) the "Interest!" key is pressed for an unrecorded program). That is, the DTV 1 can start recording in both the following cases: a case where the DTV 1 has received a control signal as a result of the depression of a recording key on the remote control and a case where the DTV 1 has received a control signal as a result of the depression of the "Interest!" key. The process performed when the DTV 1 has received as a result of the depression of the "Interest!" key differs according to the status of the DTV 1 as described later with reference to FIG. 15A and the like.

FIG. 23 shows a cloud menu displayed by the DTV 1. The notice of the message is reflected on the message icon. In addition, the scene list icon can be selected to display a scene list screen of FIG. 24. That is, the entered scene information can be selected from the scene list screen. For example, when the user has selected desired entered scene information, the DTV 1 reproduces a scene corresponding to the selected desired entered scene information. In addition, when the user has selected continuous reproduction on the basis of a plurality of items of entered scene information, the DTV 1 links a plurality of scenes corresponding to a plurality of items of entered scene information and reproduces the linked scenes continuously. Moreover, when the user has selected a merchandise icon, a shopping icon, or the like included in entered scene information, the DTV 1 displays a merchandise information site, a merchandise purchase site, a shopping site, or the like.

Hereinafter, an example of the recommended [RE] specification of a time cloud is shown.

### «Recommended scenes»

### <Highly recommended scene>

A time slot with a high rating is calculated on the basis of a viewing log and scenes of the corresponding data are set as scenes with a high rating. Of the scenes, one in a program recorded by the user is recommended.

### <Popular scene>

Tags or scenes with many tag jumps are calculated on the basis of a tag jump log in a time cloud. Of the tags or scenes, one in a program recorded by the user is recommended.

### <Everyone's Interest scene>

Scenes or tags frequently bookmarked are calculated on the basis of scenes or tags entered into Favorites by time cloud users. Of the scenes or tags, one in a program recorded by the user is recommended.

### <Twitter lively scene>

A time slot with a large number of tweets is calculated on the basis of tweets containing a broadcast station hash-tag. A scene managed by a corresponding metadata creation server is recommended as a lively scene.

### <Friend's recommended scene>

A scene transmitted by a friend using <Message transmission to a friend> is recommended.

### <User's recommended scene list>

A scene list created by the user collecting the user's favorite tags or scenes is presented.

### <Friend viewing scene>

A tag or scene with many tag jumps is calculated on the basis of a friend's log of tag jumps. The tag or scene is recommended.

### <Popular merchandise and store scene>

The number of jumps to purchase sites (merchandize) is tallied. Purchase sites with a large number of jumps are recommended. The number of jumps to store sites (stores) is tallied. Store sites with a large number of jumps are recommended.

### <Recommended scenes for you>

Personalized recommendation. Scenes suiting the user's taste are calculated on the basis of other users' profile and viewing scene logs. Of the scenes, one in a program recorded by the user is recommended.

Hereinafter, control instructions (control inputs) given by remote-control units (remote-control terminals) shown in FIGS. 25A and 25B, representation examples (screen representations) displayed on the DTV, and the transitions of representation examples will be explained in sequence. Let the remote-control terminal of FIG. 25A be of type A (10) and that of FIG. 25B be of type B (101).

As shown by an example of FIG. 25A, the type-A remote-control terminal (remote control A) 10 includes a "Power" key 111 that turns on and off the power supply of the DTV 1, arrow keys 112 ("up"), 113 ("down"), 114 ("left") and 115 ("right") that correspond to "up", "down", "left" and "right" movements respectively and that can specify the movement of the cursor or the change of the position of a representation on which the user focuses, an "Chosen" key 116 that inputs control corresponding to "Chosen", a "Return" key 117 that can input a control instruction to release a preceding representation (screen) or the currently executing (input) mode or the like, a "Exit"/"Clear" key 129 that can input a control instruction to cancel the display of a menu screen or the currently displayed input (setting) screen, that is, a control instruction to terminate the input or the selection, an "input switching" or "selection" key 118 that inputs a control instruction to switch between broadcast (program) providers, including terrestrial digital broadcasting, direct broadcasting by satellite (DBS) digital broadcasting, communication Satellite (CS) digital broadcasting, external input, and the like, a "Conventional digital" key 162 that can directly select Conventional (terrestrial) digital broadcasting, a "DBS" key 163 that can directly select DBS digital broadcasting, a "CS" key 164 that can directly select CS digital broadcasting, a channel key group 119 that corresponds to channel numbers "0" to "12" for directly inputting a channel (CH) that specifies a broadcasting station that provides a broadcast (program) the user is going to receive. The remote-control unit 10 includes several special keys covered with a lid 110, for example, almost on the opposite side of the "Power" key 111. A "REC" key 161 that can input a control instruction to specify the start of the recording of a program currently being viewed is housed under the lid 110 in the type-A remote control 10.

The remote-control unit 10 further includes the "Interest!" key 123, "Blue" key 125, "Red" key 126, "Green" key 126, and "Yellow" key 128 that input control instructions corresponding to action buttons (representations), including the "Scenefo", "SceneList", "ScenePlay", "Interest!" and "Nice!" in the embodiment. In addition, the remote-control unit 1 further includes a "Without reserve" key 151 that can input a control instruction to realize a jump to "Cloud without reserve" shown in FIG. 40 (the activation of the "Cloud without reserve" function from a home screen representation).

Furthermore, it is desirable that the remote-control unit should include a "Quick menu" key 120 that can input a control instruction corresponding to, for example, the activation (calling) of a preset number of operation modes and a "Jump first" key 150 that can input a control instruction to specify the reproduction of a program currently being reproduced (viewed) from the beginning.

The remote-control unit 10 further includes the "Interest!" key 123 that inputs control instructions corresponding to action buttons (representations), including "Interest!" and "Nice!" in the embodiment, and the "Blue" key 125, "Red" key 126, "Green" key 127 and "Yellow" key 128 that can input control instructions corresponding to a "Blue" button, a "Red" button, a "Green" button, and a "Yellow" button respectively. When the "Interest!" key 123 has been pressed, the remote-control unit 10 transmits "Nice!" to a "Nice!" server (an external server) explained in FIG. 30. When the "Interest!" key 123 has been pressed again according to the characteristic of the "Nice!" server (the external server), the already transmitted "Nice!" is canceled.

Suppose the DTV 1 has displayed, for example, a Web page on the screen and a button image for informing a server of the presence or absence of the user's taste has been displayed on the screen. Here, on receiving a control signal produced by the "Interest!" key 123, the DTV 1 may determine that the button image has been manipulated and inform the server of this.

In addition, on receiving a control signal produced by the "Interest!" key 123 while music content is being reproduced, the DTV 1 may not only download and display music information on the music content but also transmit identification data on and information indicating the playback position of the music content to a server that manages information on taste in music.

It is desirable that the remote-control unit 10 should further include a "Quick menu" key 120 that can input a control instruction corresponding to the activation (calling) of, for example, a preset number of operation modes and a "Recording list" key 160 for displaying a list of already recorded programs.

As shown by an example of FIG. 25B, the type-B remote-control terminal (remote control B) 101 includes a "Power" key 111, arrow keys 112 ("up"), 113 ("down"), 114 ("left"), and 115 ("right"), an "Chosen" key 116, a "Return" key 117, a "Exit/Clear key 129, an "input switching/selection key 118, and a channel key group 119 that corresponds to channel numbers "0" to "12" for directly inputting a channel (CH) that specifies a broadcasting station that provides a broadcast (program) the user is going to receive. The remote-control unit 101 further includes several special keys covered with a lid 110, for example, almost on the opposite side of the "Power" key 111. A "REC" key 161 that can input a control instruction to specify the start of the recording of a program currently being viewed is housed under the lid 110 on the type-B remote control 10.

The remote-control unit 101 further includes the "Scenefo" key 121, "SceneList" key 122, "ScenePlay" key 130, "Interest!" key 123, "Blue" key 125, "Red" key 126, "Green" key 126, and "Yellow" key 128 that input control instructions corresponding to action buttons (representations), including the "Scenefo", "SceneList", "ScenePlay", "Interest!" and "Nice!" in the embodiment. In addition, the remote-control unit 101 further includes a "Without reserve" key 151 that can input a control instruction to realize a jump to "Cloud without reserve" shown in FIG. 40 (the activation of the "Cloud without reserve" function from a home screen representation).

Furthermore, it is desirable that the remote-control unit 101 should include a "Quick menu" key 120 that can input a control instruction corresponding to, for example, the activation (calling) of a preset number of operation modes and a "Jump first" key 150 that can input a control instruction to specify the reproduction of a program currently being reproduced (viewed) from the beginning.

Hereinafter, various operations of the DTV 1 including the aforementioned transition of screens will be explained. An explanation below relates to, for example, [SF-000], [SF-001], [SF-002], [SF-003], [SF-040], [SF-050], [SF-050b], and [SF-051] in the display example shown in FIG. 8, further relates to, for example, [SF-999], [SF-000], [SF-001], [SF-002], [SF-003], [SF-010], [SF-010b], [SF-040], [SF-050], [SF-050b], [SF-055], [SF-055b], [SF-0004], [SF-0005a], [SF-0005b], [SF-006a], [SF-011], [SF-012], [SF-012b], and [SF-020] in the display examples shown in FIGS. 15A, 15A1, 15A2, 15B, 15C, and 15D, and still further relates to FIG. 23, FIG. 24, and others. In addition, in the explanation, a drawing related to a relevant element will be quoted as needed.

### [1] Activating "Scenefo" and "SceneList"

[1-1] For example, when a control instruction has been input with the "Interest!" key 123 on the remote-control unit 10, that is, the "Interest!" key has been pressed (or the depression of an action button (representation) displayed on the DTV 1 has been detected) on a screen representation [SF-000] that is reproducing a program, a screen representation [SF-050 (full view)], [SF-055 (pane representation)], [SF-050b (full view)], or [SF-055b (pane representation)] that displays SceneList including the scene is displayed as shown in FIGS. 17 and 18. At this time, a scene program currently being reproduced in the listed SceneList is reproduced. When the DTV 1 is being connected to the Internet, the initial screen representation is [SF-999]. Suppose each screen representation displayed by default is a pane representation ([SF-055]/[SF-055b]). In this case, suppose the representation switches between a pane representation alternately and a full view representation each time the "Blue" key 125 on the remote-control unit 10 is pressed.
[1-1'] In the pane representation and the full view representation replaced with each other alternately each time the "Blue" key 125 on the remote-control unit 10 is pressed, a five-stage (row) "SceneList" in the pane representation is changed into a four-stage (row) "SceneList" in the full view representation, with a list name displayed below an image display (video) in the pane representation being displayed in an area corresponding to the "SceneList" display position in the uppermost part.
[1-2] For example, when "SceneList" has been activated from a quick menu activated in response to a control instruction given by the "Quick menu" key 120 on the screen representation [SF-000] that is reproducing program, a list screen representation [SF-003] corresponding to the program being reproduced is displayed. The representation transits to a list screen representation [SF-040] that displays a list selected from the list displayed on [SF-003] as shown in FIG. 16. When, the user has focused on any "SceneList" on the displayed list screen representation [SF-003] and input a control instruction with the "Chosen" key 116. If the "Green" key 127 on the remote-control unit 10 has been pressed (to input a control instruction), the list screen representation [SF-040] changes back into the list screen representation [SF-003] that enables the selection of a list. When a list displayed on the list screen representation [SF-040] includes a "formal tag list", a company-created tag list, an icon or a pictogram/distinguishing mark is displayed in the "SceneList", making it easy to distinguish between a company-created tag list and a user-created tag list. The "formal tag list" indicates a tag list stored in the tag list server S12 of FIG. 13 among the tag lists created by previously designated companies.
[1-3] For example, in a state where the time cloud function has been activated, that is, the home menu shown in FIG. 23 has been displayed, when the user has focused on a "SceneList" representation displayed in an icon (or a thumbnail representation) and input a control instruction with the "Chosen" key 116, the representation transits to the list screen representation [SF-040] as explained in [1-2]. In addition, when the list screen representation [SF-040] includes a "formal tag list", a company-created tag list, an icon or a pictogram (a distinguishing mark) is displayed in the "SceneList" (conforming to [1-2]).

### [2] Full screen display from SceneList (transition to a simple program reproduction [return])

The time cloud function has been activated and, for example, an arbitrary "SceneList" is displayed on, for example, the list screen representation [SF-040]. That is, when the list screen representation [SF-040] has been displayed according to [1-2]/[1-3], a control instruction is input with the "Return" key 117, enabling the screen representation to return to the full screen representation [SF-000] that displays a program being reproduced on the full screen.

### [3] Operations when "Return" key is pressed

When the "Chosen" key 116 has been pressed in SF-050/SF-055/SF-050b/SF-055b, the screen representation transits to SF-999 and reproduces the video of a scene on which the user had focused when the instruction was input. When a control instruction has been input with the "Return" key 117 in SF-050/SF-055/SF-050b/SF-055b, the screen representation transits to the full screen representation [SF-999] and the display of the video being reproduced in SF-050/SF-055/SF-050b/SF-055b when the control instruction was given is continued. That is, the screen representation transits as if the "Chosen" key 116 had been pressed (or a control instruction had been input), causing the reproduced video to be displayed on the full screen.

### [4] Operations when the "Return" key has been pressed

When a screen representation displayed when a control instruction was input with the "Return" key 117 is a site on the Internet (where a path runs from the DTV MW to a browser in FIG. 5), the transition of a screen to SF-010/SF-010b in response to a control instruction given by the "Return" key 117 is made invalid. That is, since the screen representation at the time of the start-up of the browser is about shopping sites or content providers (mainly permitting content to be downloaded) on the Internet, the "Return" key 117 unique to the remote control of the DTV 1 is disabled, making it possible to inform the user that the screen representation currently being displayed is a screen representation on the Internet, not a broadcast (program), displaying the screen representation [SF-020] shown in FIG. 19. In the screen representation [SF-020], a Web page is displayed. When a control instruction has been given with the "Return" key 117, the screen transits so that the Web pages may be retraced (a page has been displayed is display).

If the screen representation [SF-020] is provided with a "Return" button, that is, a "button" representation (BUI/UI) in the screen representation that operates as a result of the detection of a cursor movement with the remote-control unit 10 and the depression of the "Chosen" key 116, independently from the "Return" key 117 on the remote-control unit 10, it is possible to clearly demonstrate a method of exiting from a browser (or a method of canceling the Internet connection).

In the screen representation [SF-020], a reproduced image, information on products related to the content of the reproduced image, and a Web page at which the products can be purchased are displayed. Then, the screen transits to SF-010/SF-010b so that the displayed content of the whole screen may be changed according to the operation of buttons on the screen. In response to a control instruction given by the "Return" key 117, a Web page screen displayed in a partial area of the screen is caused to transit and the screen representation [SF-020] is maintained.

### [5] Operations when there is no tag list

For example, when a program is being reproduced, with "Scenefo"/"SceneList" activated in [1], there is a case where a tag list (or a "SceneList") for the program being reproduces has not be found.

In this case, for example, according to [1-1], the menu screen representation [SF-001] is displayed [15b] when a control instruction has been given with the "Interest!" key 123 or when no tag list has been found [15a (NO)]. Hereinafter, when the user has given an instruction to retrieve a list ("SceneList") [15b (YES)], a list screen representation [SF-003] corresponding to the program being reproduced is displayed (alternative acquisition selection). When the user has not given an instruction to retrieve a list ("SceneList") [15b (NO)], the screen representation returns to the initial screen representation [SF-000].

The screen representation transits to the screen representation [SF-050 (full view)] or screen representation [SF-050b (pane representation)] according to [1-1], if a tag list ("SceneList") has been found (exists) [15a (YES)]. In this case, a screen to be displayed (SceneList) is apparent from the list screen representation [SF-040]. It is normally a "formal tag list", a company-created tag list.

### [6] Operations when the "Interest!" key has been pressed

For example, when the user has pressed the "Interest!" key 123 (or input a control instruction) for the selected scene (the scene on which the user has focused) or has pressed the "Chosen" key 116 while the "Scenefo"/"SceneList" is being activated and a program is being reproduced with the list screen representation [SF-040] displayed, a scene including the selected scene in a "SceneList" displayed in the list screen representation [SF-040] is positioned at the top of the displayed "SceneList" and highlighted. Accordingly, subsequent scenes are displayed in descending order. A screen representation, which is displayed according the previous representations (selections), is either the screen representation [SF-050 (full view)] or screen representation [SF-050b (pane representation)].

Each time the "Blue" key 125 on the remote-control unit 10 is pressed, the representation is switched between a pane representation and a full view representation alternately. In each of the screen representation [SF-050 (full view)] and the screen representation [SF-050b (pane representation)], when the "Yellow" key 128 has been pressed, double screen representations, a "Detailed explanation representation" and an "Action button (representation)", appear as shown on the screen representation [SF-010] or screen representation [SF-010b] of FIG. 17 (FIG. 15C). In addition, while the screen representation [SF-010] or screen representation [SF-010b] is being displayed, when the "Yellow" key 128 has been pressed (or a control instruction has been input), a "Detail explanation representation" 150 shown in FIG. 15C is displayed in, for example, pop-up form within the screen representation [SF-010] or screen representation [SF-010b].

That is, when the total amount (volume) of the detailed explanation representation (M data or a tag list) is great and the user wants to browse the whole detailed explanation representation, the user causes the screen representation to transit from the double-screened representation shown in FIG. 17 to the screen representation [SF-011] of FIG. 15C, enabling M data to be displayed in a specific size, for example, in a pop-up window that displays M data on, for example, the entire screen. In addition, the user presses the "Return" key 117 (or inputs a control instruction), causing the screen representation [SF-010] or screen representation [SF-010b] to be displayed.

### [7] Operations when the "Interest!" key has been pressed

For example, when the user has pressed the "Interest!" key 123 (or input a control instruction) for the selected scene (the scene on which the user has focused) or has pressed the "Chosen" key 116 while the "Scenefo"/"SceneList" is being activated and a program is being reproduced with the list screen representation [SF-040] displayed, a scene including the selected scene in a "SceneList" displayed in the list screen representation [SF-040] according to the explanation of [6] is positioned at the top of the displayed "SceneList" and highlighted. In addition, subsequent scenes are displayed in descending order.

Further, suppose a reproducing position mark (indicator), for example, a solid pattern with a "triangular" or an "inverted triangle"), is moved down the rows of scenes as illustrated in the extracted screen representation [SF-055] of FIGS. 26A, 26B and 26C, without changing the highlighted scene according to the reproducing time of a video display (moving image). That is, the focus position is changed according to a user operation, whereas the position of a reproducing mark is changed as the reproduction progresses. Therefore, even if the focus position (the position in which the operation cursor is placed) has not been changed, when a scene being reproduced proceeds to the next scene, the reproducing position mark also moves to the next scene. When, the reproducing position mark has moved to below the rows of all the scenes as the reproducing time has passed, it goes beyond the display area in the end and disappears (FIG. 26C).

However, when a control instruction has been input again with the "Interest!" key 123 after the reproducing mark has disappeared (or when the on of the "Interest!" key 123 has been detected or when the "Interest!" key has been pressed again), a focus is placed in the position of the reproducing mark (or a scene corresponding to the position of the reproducing time shown by the reproducing mark). That is, the reproducing mark that would go out of row [U] of scenes in FIG. 27A and be located in row [W] of virtual scenes shown in FIG. 27B slides to a position shown in FIG. 27C (a fifth row in a five-row representation as shown in FIG. 27A) when the "Interest!" key 123 has been pressed.

In addition, as shown in FIGS. 28A, 28B, 28C and 28D, with the reproducing mark being displayed in the same position, the individual scenes displayed by the rows of scenes can be scrolled with the reproducing time (that is, a row of scenes displayed in a first row is changed in such a manner that, while the first row in FIG. 28A is row [Q], the first row in FIG. 28B is row [R], and similarly, the first row in FIG. 28C is row [S], and the first row in FIG. 28D is row [T]).

Furthermore, as shown in FIGS. 29A, 29B, 29C and 29D, as for five rows of scenes first displayed on the screen representation [SF-055], the reproducing position mark <indicator> moves as shown by FIG. 29A to FIG. 29C. After the reproducing time has exceeded the time FIG. 29D at which the reproducing position mark reached the final position (the bottom stage) of the screen representation, the row of scenes may move up.

### [8] Recording with the "Interest!" key

FIG. 30 shows a list of actions enabled with the "Interest!" key.

When the "Interest!" key 123 on the remote-control unit 10 has been pressed (or a control instruction has been input), if a program being viewed at the time is an unrecorded program, information at the instant, channel information, and airdate information are transmitted to a server and recording is started.

If a program being viewed (reproduced) is an already recorded program, full information on a scene including the point in time when the key 123 was pressed (interval between beginning and ending), channel information, and airdate information are transmitted to a server.

### [8-2] Recording with the "Interest!" key

As for a program entered (or recorded) as a result of the "Interest!" key being pressed, its scene can be reproduced by pressing, for example, the "Red" key 126 (the function of "Enter an "Interest!" scene" shown in FIG. 30).

When the "Interest!" key 123 has been pressed (or a control instruction has been input) while a program is on the air or PVR content or time-shift content is being viewed, if the program being viewed at the time is an unrecorded program, information at the instant is transmitted to a server and recording is started. The viewing position when the "Interest!" key was pressed can be read easily from the server. The user can reproduce the scene by pressing, for example, the "Red" key 126 with the function of the "Enter an "Interest!" scene".

### [9] Display format for each tag list

For example, the tag list SceneList used for programs being reproduced in [1-1] to [1-3] includes a "formal tag list" which is a company-created tag list and a "user-created tag list" as described above. The beginning (time) and ending (time) are displayed for each scene, regardless of the tag list type.

As for the "formal tag list", both the beginning (time) and ending (time) are defined in actual time. Therefore, the length (actual time) of a scene is the time between the beginning and ending of the scene.

In contrast, as for the "user-created tag list", only the beginning time is generally given to each scene. Therefore, when the length of a scene is found, it is necessary to determine the length (actual time) of a scene by performing back calculation on the basis of the beginning time of the scene and the beginning time of the next scene.

Accordingly, a distinguishing mark (formal mark) attached to a "formal tag list" is identified and then the format in which the tag list ("SceneList") is displayed and the control method are changed. Since the "formal tag list" and the "user-created tag list" differ from each other in Access Point information (API), a determination can be made on the basis of API when a formal mark (the "formal tag list") is identified.

### [10] A selection screen can be skipped (automatically) by selecting product selling sites (A company, B company, ...) in advance

While a program is being reproduced with SceneList activated, when a screen representation [SF-010] of a list selected from the tag list SceneList for, for example, the program being reproduced is displayed, there may be a case where a product photo preview is provided as shown in FIG. 19 (FIG. 15C) and a link to a product selling site has been set. Here, a plurality of sites may have been set in the link. In this case, as shown in the screen representation [SF-020], a product selling site (one company) is selected in advance, thereby enabling a selection screen illustrated in the screen representation [SF-012] to be skipped. As for a specific product, only one site may have been set as a link to a product selling site. In this case, too, a selection screen can be skipped. Concerning a situation where a selection screen is skipped, there are a case where a site has already been selected and a case where there is only one available product selling site in the first place. When a selection screen is skipped, an image that tells for what reason the selection screen is skipped may be displayed.

That is, as shown in the screen representation [SF-020], when a product selling site has not been set, a selection screen for determining whether to use a product selling site as shown in the screen representation [SF-012] is displayed, needing a user input (selection).

Even if the DTV 1 has displayed a product selling site, it is relatively difficult for the user to complete the settlement procedure at the product selling site by using the remote control of the DTV 1. Therefore, as described above, the DTV 1 transmits the URL of the shopping (product selling) site to the application of the mobile device 2 and informs the user that the shopping settlement procedure or the like will be continued with the application of the mobile device 2. The user can complete the shopping settlement procedure or the like with the mobile device 2 at hand, using, for example, a touch input function of the mobile device 2.

In this case, the user can perform setting so as to go to a tablet computer (mobile device 2) by pressing, for example, the "Green" key 127, provided that the power supply is on and a specific application has been activated in the tablet computer (mobile device 2).

When a home network, such as a wireless LAN, can be used and when the power supply of the tablet computer (mobile device 2) is on, a specific application can be activated.

### [11] Display format for each tag list

For example, with the "SceneList" activated, when a program being reproduced is a program on the Internet and is in a full screen video display shown in the screen representation [SF-999] of FIGS. 15A and 15A1, scene information ("formal tag list" (M data)) can be displayed in a format like a banner [115].

Particularly when there is only one item of scene information, setting can be performed so that the banner [115] may pup up at the change of scenes (with the timing of changing scenes).

For example, the ON (execution)/OFF (nonexecution) of the format (display) of the banner [115] can be set. When a screen display (of a scene) has been skipped, scene information can be displayed in the format of the banner [115] in pop-up form. In addition, on receiving mail, the DTV 1 may give notice of the reception of mail in the same display format (including display position and design) as that of the banner [115].

### [12] Operations at the program end (time of termination)

For example, with the time cloud activated, when a program being reproduced using the "SceneList" is the PVR program, the program recorded with a time shift machine, or the program recorded with "Without reserve," the program is supposed to be paused (or keep a pause without termination) at the completion of the reproduction of the program. For example, when a program is reproduced, a pause is kept at the end of the file. When a play list is reproduced, a pause is kept at the end of a file at the end of the list.

That is, when the reproduction of a program has been completed, if the reproduction of a program differing from the current one is started, the list cannot be seen (or the list cannot be referred to). Therefore, it is desirable that a program being reproduced using the "SceneList" should be kept paused until the user has expressed the intension of terminating the reproduction. It is particularly important to avoid unnecessary on-air display (or unnecessarily displaying an ordinary broadcast program) to return for actual on time. In addition, repeat reproduction may be performed in place of a pause.

When the maximum time for which a pause can be made and which is unique to the DTV 1 has been reached, a termination process is performed forcibly.

### [13] Resume

For example, when a program reproduced at the time of the activation of the time cloud is a program reproduced by the resume function, the "tag list" and "tag focus" corresponds to the focusing of the tag used last are stored temporarily by the resume function. The resume function is supposed to resume the continuous list at the time of, for example, continuous reproduction.

Hereinafter, the reproduction of a scene unit by "ScenePlay" in the DTV 1 will be explained. FIGS. 31A, 31B, and 31C show an example of a list of "ScenePlay" functions.

For example, the DTV 1 transmits a recording log of recorded content to a server in response to a content recording process. The recording log includes DTV 1 identification data and recorded content identification data (program name, program airdate, channel number, ID, and the like). The server manages recorded content identification data items so as to cause the identification data items to correspond to DTV 1 identification data items. This enables the server to manage all of the content recorded by the DTV 1. That is, the DTV 1 can manage all of the reproducible content. For example, a history collection server S13 in FIG. 10 manages all of the content each item of which the DTV 1 can reproduce. While all of the content recorded by the DTV have been explained as being reproducible, all of the content recorded by a recorder connected to the DTV can also be included as reproducible content. A device in which content is to be recorded may be a storage medium (for example, a hard disk) built in the DTV 1, a storage medium externally connected to the DTV 1, a storage medium built in a recorder, or a storage medium externally connected to a recorder.

The server manages a plurality of items of scene information corresponding to a plurality of scenes included in each of a plurality of content items. The server transmits, to the DTV 1, items of scene information corresponding to content that can be reproduced by the DTV 1. For example, the metadata server S11 shown in FIG. 10 manages a plurality of items of scene information. The scene information includes identification data (program name, program airdate, channel number, ID, and the like). Since the server manages identification data items on recorded content that can be reproduced by the DTV, it can detect an item of scene information to be transmitted to the DTV 1 and transmit the detected item of scene information to the DTV 1. Specifically, the server compares an identification data item on a recorded content that can be reproduced by the DTV 1 with a identification data item on an item of scene information and transmits the item of scene information to the DTV 1 when, for example, at least a part of the identification data item on the recorded content coincides with at least a part of the identification data item on the item of scene information.

The DTV 1 receives, from the server, one or more items of scene information corresponding to one or more scenes of one or more content items. Here, it is assumed that the DTV 1 receives, from the server, a plurality of items of scene information corresponding to a plurality of scenes of each of a plurality of content items.

In addition, the DTV 1 can retrieve recommended ones from a plurality of items of scene information on the basis of at least either various items of information (including audience rating information explained below) or specified conditions (for example, keywords) from the server and present (display) the retrieved items of scene information. For example, the DTV 1 can present items of recommended scene information by category (FIG. 31B).

For example, on the basis of surging search word information (popular search keyword information) from the server, the DTV 1 can present a plurality of items of scene information as highly recommended scenes. For example, the DTV 1 can present a plurality of items of scene information corresponding to the top 10 surging search words included in the surging search word information. That is, the DTV 1 can present a plurality of items of scene information including the top 10 surging search words. The DTV 1 can not only reproduce a scene corresponding to the selected one of the items of scene information corresponding to the top 10 surging search words (for example, a scene corresponding to the first place in the surging search words) but also consecutively reproduce a plurality of scenes corresponding to the items of scene information corresponding to the top 10 surging search words (for example, a plurality of scenes that take the first to tenth places in the surging search words).

For example, on the basis of audience rating information from the server, the DTV 1 can present a plurality of items of scene information as highly recommended scenes. For example, the DTV can present the items of scene information corresponding to the audience rating top 10 included in the audience rating information. The audience rating information, which is created on the basis of the result of tallying up reproducing logs or the like from more than one DTV 1, includes IDs of the items of scene information about the first to tenth places in the audience ratings. The DTV 1 can not only reproduce a scene corresponding to the selected one of the items of scene information corresponding to the audience rating top 10 (for example, a scene corresponding to the first place in the audience ratings) but also consecutively reproduce a plurality of scenes corresponding to the items of scene information corresponding to the audience rating top 10 (for example, a plurality of scenes that take the first to tenth places in the audience ratings). For example, as shown in FIG. 42, the DTV 1 can present a plurality of items of scene information corresponding to the top 30 popular scenes.

When an item of scene information has been selected, the DTV 1 retrieves a scene in content on the basis of identification data included in the selected item of scene information and reproduces the retrieved scene. For example, the DTV 1 can retrieve a scene from the content broadcast and recorded within a week. When a plurality of items of scene information have been selected, the DTV 1 retrieves a plurality of scenes from a plurality of content items on the basis of a plurality of identification data items included in the selected items of scene information and reproduces the retrieved scenes. For example, the DTV can retrieve a plurality of scenes from the content broadcast and recorded within a week. In addition, as shown in FIG. 41, the DTV 1 can present a plurality of items of scene information corresponding to the instantaneous audience rating top 30.

Furthermore, on the basis of popular scene information (scene information with a high reproduction rate) from the server, the DTV 1 can present a plurality of items of scene information as popular scenes. For example, the DTV 1 can present a plurality of items of scene information corresponding to the popular scene top 10 included in the popular scene information. The popular scene information, which is created on the basis of the result of tallying reproducing logs or the like from more than one DTV 1, includes IDs of the items of popular scene information about the first to tenth places in the popular scenes. The DTV 1 can not only reproduce a scene corresponding to the selected one of the items of scene information corresponding to the popular scene top 10 (for example, a scene corresponding to the first place in the popular scenes) but also consecutively reproduce a plurality of scenes corresponding to the items of scene information corresponding to the popular scene top 10 (for example, a plurality of scenes that take the first to tenth places in the popular scenes). For example, as shown in FIG. 42, the DTV 1 can present a plurality of items of scene information corresponding to the top 30 popular scenes.

When an item of scene information has been selected, the DTV 1 retrieves a scene in content corresponding to the identification data included in the selected scene information and reproduces the retrieved scene. When a plurality of items of scene information have been selected, the DTV 1 retrieves a plurality of scenes from a plurality of content items corresponding to a plurality of identification data items included in the selected items of scene information and reproduces the retrieved scenes.

In addition, on the basis of popular site information from the server, the DTV 1 can present a plurality of items of scene information as scenes related to popular site information. The DTV 1 can present a plurality of items of scene information related to the popular site top 10 included in the popular site information. For example, the popular site information, which is created on the basis of the result of tallying site access histories or the like, includes IDs of the items of popular site information about the first to tenth places in the popular sites. The DTV 1 can not only reproduce a scene corresponding to the selected one of the items of scene information corresponding to the popular site top 10 (for example, a scene corresponding to the first place in the popular sites) but also consecutively reproduce a plurality of scenes corresponding to the items of scene information related to the popular site top 10 (for example, a plurality of scenes that take the first to tenth places in the popular sites).

Moreover, as shown in FIG. 43, the DTV 1 can not only present Friend's recommended scene information but also reproduce a scene corresponding to one selected from the presented items of scene information.

Furthermore, as shown in FIG. 44, the DTV 1 can not only present items of scene information corresponding to Today's hot words but also reproduce a scene corresponding to one selected from the presented items of scene information.

For example, the DTV 1 can collect only goal scenes in the football (soccer) games and reproduce them consecutively.

Next, an example of the transition of screens will be explained. FIG. 32 shows an example of the transition of ScenePlay screens. FIG. 33 shows an example of a cloud menu screen. FIGS. 34 to 39 each show an example of a screen after the transition.

For example, when the DTV 1 has displayed a cloud menu screen (FIG. 33 or 40) and a time cloud (cloud without reserve (FIG. 40) has been selected from the cloud menu screen, the DTV 1 displays a by-category scene reproducing screen (FIG. 34). For example, the by-category scene reproducing screen includes the following items: Today's highly recommended scene, Popular scene ranking, Hot-selling product ranking, Popular store ranking, Friend's recommendation, and Recommendation based on history. Moreover, the by-category scene reproducing screen (FIG. 34) can be customized by the user. For example, scenes hit by keyword search can be collected and displayed on the user-customized scene reproducing screen (FIG. 45).

Furthermore, with the transition of screens, the DTV 1 displays a scene/program search screen (FIG. 35), a detailed search screen (FIG. 36), a Interest scene screen (FIG. 37), a Interest scene delete screen (FIG. 38), a recommended scene/program screen (FIG. 39), or the like.

The "ScenePlay" of the DTV 1 described above will be summarized.

The DTV 1 can present a list of recommended scenes, specify a program including a directly selected scene or the selected scene on the basis of the scene selected from the presented list of recommended scenes, and reproduce the specified program or scene. In addition, the DTV 1 can reproduce a concatenation of only recommended scenes continuously.

The details are as follows:
The DTV 1 retrieves recommendations in scenes.

The DTV 1 displays recommended scenes, recommended programs, favorites, and scene retrieval in list form.

The DTV 1 presents a plurality of representative scenes.

The DTV 1 searches programs (recorded content) the user can view for scenes.

A server stores a recording/deleting log from each DTV 1 to cause the DTV 1 to realize what has been described above. Alternatively, the DTV 1 may retrieve scene information from a server on the basis of a list of recorded content.

Content recorded in a recorder or the like connected to the DTV 1 may be made viewable content on the DTV.

The DTV 1 leaves at least favorite scenes even if it cannot reproduce them (so as to introduce merchandise or the like).

The DTV 1 leaves a history of a search formula for a Scene search history. Alternatively, the DTV 1 enters a favorite search key.

The DTV 1 can select search in programs or in scenes.

The DTV 1 presents a plurality of recommended scene categories as follows: for example, <Today's highly recommended one>, <Popular scene>, <Hot-selling one>, and <Friend's recommendation or the like>.

When reproducing a plurality of scenes consecutively, the DTV 1 reproduces a scene following the present one or a scene in content following the content including the present scene.

All of the procedures for the above processes can be realized with software (a scene information output program). Therefore, the processes can be realized by just installing a program (an application) for executing the processing procedure into a client terminal or a mobile device and running the program.

For example, the client terminal or mobile device can download the program from a server, store the downloaded program, and complete the installation of the program. Alternatively, the client terminal or mobile device can read the program from a computer-readable storage medium, store the read program, and complete the installation of the program.

## Claims

1. A scene information processing apparatus (1) **characterized by** comprising:
a reproducing module (144(14(1))) configured to reproduce and configured to display content;
a communication module (15/234(222)) configured to receive scene information corresponding to a scene in the content or transmits input information corresponding to a scene in the content; and
an input module (243(222)) configured to cause the communication module to determine, in a transmittable manner, a point in time of the input information was input during the reproduction of the content.

2. The scene information processing apparatus of claim 1, **characterized in that**
the content starts to be recorded at the time that the input module inputs the input information when the content being reproduced is an unrecorded content.

3. The scene information processing apparatus of claim 1, **characterized in that**
the communication module determines, in a transmittable manner, scene information including the point in time that the input module input the input information when the content being reproduced is a recorded content.

4. The scene information processing apparatus of claim 2, **characterized in that**
the content that started to be recorded at the time that the input module input the input information is capable of starting to be reproduced at the time that the input information is input.

5. An electronic device (1) **characterized by** comprising:
a reproducing module (144(14(1))) configured to reproduce and configured to display content;
a communication module (15/234(222)) configured to receive scene information corresponding to a scene in the content or transmits input information corresponding to a scene in the content;
a video control module (148(140)) configured to control a reproduction position of the content displayed by the reproducing module; and
a controller (148) configured to instruct the video control module to process the content on the basis of the time of the input information was input.

6. The electronic device of claim 5, **characterized in that**
the controller configured to start to be recorded at the time of the input information is input, if the content being reproduced is an unrecorded content.

7. The electronic device of claim 5, **characterized in that**
the communication module configured to determine, in a transmittable manner, scene information including the point in time of an input module input the input information when the content being reproduced is a recorded content.

8. A scene information processing method **characterized by** comprising:
reproducing and displaying content;
receiving scene information corresponding to a scene in the content or transmitting input information corresponding to a scene in the content; and
determining, in a transmittable manner, a point in time of the input information was input during the reproduction of the content.

9. The scene information processing method of claim 8, **characterized in that**
Starting record of content at the time of the input information is input, if the content being reproduced is an unrecorded content.
